# EUROPÄISCHE PATENTSCHRIFT

(11) **EP 4 096 411 B1**
(45) Veröffentlichungstag und Bekanntmachung des Hinweises auf die Patenterteilung: **19.07.2023**
(21) Anmeldenummer: 20736633.7
(22) Anmeldetag: 01.07.2020
(51) Int. Cl.: B26D 1/06, B26D 5/20, B26D 1/00, A22C 21/00

(54) **VORRICHTUNG UND VERFAHREN ZUR MITLAUFENDEN WERKZEUGPOSITIONIERUNG SOWIE ANORDNUNG UND VERFAHREN ZUR GABELBEINENTFERNUNG**
APPARATUS AND METHOD FOR MOVING ALONG TOOL POSITIONING AS WELL AS ASSEMBLY AND METHOD FOR WISHBONE REMOVAL
DISPOSITIF ET PROCÉDÉ POUR LE POSITIONNEMENT PAR OUTILS MOBILES AINSI QU' UN AGENCEMENT ET PROCÉDÉ POUR ENLEVER LA FOURCHETTE

(43) Veröffentlichungstag der Anmeldung: 07.12.2022
(73) Patentinhaber: NORDISCHER MASCHINENBAU RUD. BAADER GMBH + CO KG, 23560 Lübeck (DE)
(72) Erfinder: SCHULZE, Adrian, 23560 Lübeck (DE); FISCHER, Valentin, 23560 Lübeck (DE)
(74) Vertreter: Stork Bamberger Patentanwälte PartmbB
(86) Internationale Anmeldenummer: PCT/EP2020/068516
(87) Internationale Veröffentlichungsnummer: WO 2022/002386

(56) Entgegenhaltungen:
- DE-A1- 3 117 293
- DE-B- 1 257 010
- US-A- 5 163 865
- US-A- 5 833 527

## Beschreibung

Die vorliegende Erfindung betrifft eine Vorrichtung zur mitlaufenden Werkzeugpositionierung linear geförderter Artikel sowie eine Anordnung zum Entfernen des Gabelbeins von Geflügelschlachtkörpern mit einer solchen Vorrichtung. Des Weiteren betrifft die Erfindung ein Verfahren zur mitlaufenden Werkzeugpositionierung linear geförderter Artikel sowie ein Verfahren zum Entfernen des Gabelbeins von Geflügelschlachtkörpern.

Derartige Vorrichtungen und Verfahren kommen immer dann zum Einsatz, wenn Artikel entlang einer Bearbeitungslinie fortlaufend gefördert werden und eine Bearbeitung der Artikel während des Fördervorgangs durchgeführt werden soll. Hierzu ist es erforderlich die jeweiligen Werkzeuge zur Bearbeitung mit dem zu bearbeitenden Artikel während der Bearbeitung synchron mitzuführen, so dass sich das Werkzeug und der Artikel in der Förderrichtung relativ zueinander nicht bewegen.

DE 1 257 010 B offenbart eine Betätigungsvorrichtung für einen in Bewegungsrichtung einer Papierbahn vor und zurück beweglichen mit einem feststehenden Messer versehenen Schlitten und für ein auf diesem Schlitten senkrecht zur Bewegungsrichtung der Papierbahn und während der Schlittenbewegung auf und ab bewegbares Messer zum Abschneiden von Bögen mit einem Kurbelräder und Kurbelzapfen aufweisenden Antrieb.

DE 31 17 293 A1 offenbart eine Einrichtung zum Schneiden linear bewegten Materials in Einzellängen, mit einem auf einem Maschinensockel parallel zur Bewegungsrichtung des Materials durch einen Antrieb zwischen zwei Stellungen bewegbaren Schlitten, der einen Werkzeugsatz zum Schneiden des Materials in einem Schneidhub und einem Rückführungshub trägt.

Insbesondere im Bereich der automatischen Bearbeitung von Geflügelschlachtkörpern kommen derartige Vorrichtungen und Verfahren zum Einsatz, um die Geflügelkörper mit verschiedenen Werkzeugen zu bearbeiten, während diese in Förderrichtung transportiert werden.

In der Regel werden die Werkzeuge in einem Arbeitstakt in der Förderrichtung parallel zu der Bearbeitungslinie mitgeführt, so dass die Werkzeuge aus Sicht der zu bearbeitenden Artikel in Förderrichtung stillstehen. Während des Arbeitstaktes erfolgt die Bearbeitung an den Artikeln. Nach beendeter Bearbeitung werden die Werkzeuge in einem Rücklauftakt entgegen der Förderrichtung wieder zurückgeführt, um für die nächste Bearbeitung in eine Ausgangsstellung gebracht zu werden.

Es ist daher erforderlich, die Werkzeuge in und entgegen der Förderrichtung hin und her zubewegen. Aufgrund des Trägheitsmoments der Werkzeuge treten hohe Kräfte im Moment der Richtungsumkehr auf. Hierdurch ist die maximale Frequenz der Hin- und Her-Bewegung beschränkt. Der Fördergeschwindigkeit ist daher eine obere Schranke gesetzt, so dass die pro Zeiteinheit bearbeitbare Artikelzahl beschränkt ist.

Zudem führen die auftretenden hohen Kräfte zu einer starken mechanischen Belastung des Antriebs, hohem mechanischen Verschleiß sowie zu starken Vibrationen, die die Bewegung der Werkzeuge "unrund" erscheinen lassen.

Es ist daher Aufgabe der vorliegenden Erfindung, eine Vorrichtung vorzuschlagen, die eine zuverlässige Positionierung mitlaufender Werkzeuge, insbesondere auch bei hoher Fördergeschwindigkeit, gewährleistet. Zudem ist es Aufgabe der Erfindung auftretende mechanische Belastungen sowie Vibrationen auf ein Minimum zu reduzieren. Des Weiteren besteht die Aufgabe darin, ein entsprechendes Verfahren vorzuschlagen.

Die Aufgabe wird durch die eingangs genannte Vorrichtung gelöst, die eine eine Förderstrecke bildende Fördereinrichtung zum Fördern der Artikel in eine Förderrichtung mit einer Mehrzahl zum Halten der Artikel eingerichteten Aufnahmeelementen und eine entlang der Förderstrecke angeordneten Bearbeitungsstation mit mindestens einem zum Bearbeiten der Artikel eingerichteten Bearbeitungswerkzeug umfasst, wobei die Bearbeitungsstation eine zum Positionieren des mindestens einen Bearbeitungswerkzeugs eingerichtete Positioniereinheit aufweist, wobei die Positioniereinheit durch einen in Förderrichtung gegenüber einem Trägerelement schiebebeweglichen Längsschlitten sowie einen daran quer zu der Förderrichtung schiebebeweglich angeordneten Querschlitten gebildet ist, wobei der Längsschlitten oszillierend derart angetrieben ist, dass der Längsschlitten einerseits in einem Arbeitstakt synchron mit den Aufnahmeelementen in der Förderrichtung von einer Anfangsposition in eine Endposition mitläuft und andererseits in einem Rücklauftakt von der Endposition in die Anfangsposition entgegen der Förderrichtung rückläuft, und wobei der Querschlitten mindestens ein in eine ortsfest angeordnete Kulissenführung eingreifendes Führungselement aufweist, wobei die Kulissenführung zum einen eingerichtet ist, während des Arbeitstakts den Querschlitten quer zu der Förderrichtung aus einer Warteposition zu den Aufnahmeelementen hin in eine Arbeitsposition und aus der Arbeitsposition zurück in die Warteposition zu bewegen, und zum anderen ausgebildet ist, während des Rücklauftakts den Querschlitten quer zu der Förderrichtung auslenkungsfrei zu führen.

Die erfindungsgemäße Vorrichtung bietet den Vorteil, dass mittels der Positioniereinrichtung, das mindestens eine Bearbeitungswerkzeug sowohl in der Förderrichtung als auch quer zu der Förderrichtung mittels der Kulissenführung zwangsgeführt wird. Damit wird ein stets zur Fördergeschwindigkeit synchrones Mitbewegen während des Arbeitstaktes einerseits sowie eine an die Fördergeschwindigkeit gebundene Zustellbewegung quer zu der Förderrichtung andererseits bewirkt. Auf diese Weise ist stets eine Positionierung des mindestens einen Bearbeitungswerkzeugs mit hoher Präzision gewährleistet. Vorteilhafter Weise umfasst die Bearbeitungsstation mehrere der Bearbeitungswerkzeuge, die mittels des Längs- und Querschlittens der Positioniereinrichtung entsprechend geführt bewegt werden.

Eine zweckmäßige Ausgestaltung der Erfindung ist dadurch gekennzeichnet, dass die Kulissenführung mindestens eine Arbeitstaktführungsbahn und eine Rücklaufführungsbahn umfasst, wobei die Rücklaufführungsbahn sich parallel zu der Förderstrecke linear erstreckend ausgebildet ist und sich die Arbeitstaktführungsbahn ausgehend von der Rücklaufführungsbahn jeweils von der Anfangsposition und der Endposition des Längsschlittens zu der Arbeitsposition hin erstreckt. Die Rücklaufführungsbahn ist also eingerichtet, den Längsschlitten ohne Auslenkung des Querschlittens präzise zurückzuführen, während die Arbeitstaktführungsbahn eingerichtet ist, den Querschlitten während des Arbeitstaktes zu dem zu bearbeitenden Artikel quer zu der Förderrichtung zuzustellen und anschließend wieder zurückzustellen.

Eine bevorzugte Weiterbildung der Erfindung zeichnet sich dadurch aus, dass die Arbeitstaktführungsbahn als eine Kurvenbahn ausgebildet ist. Dies bietet den Vorteil, dass die Auslenkung des Querschlittens möglichst vibrationsarm erfolgt. Zudem werden durch die kurvenförmige Bahn wirkende Kräfte reduziert und ein insgesamt "geschmeidigerer" Bewegungsablauf erzielt. Insbesondere ist die Kurvenbahn absatzfrei eingerichtet.

Eine weitere zweckmäßige Ausbildung der Erfindung ist dadurch gekennzeichnet, dass das Führungselement als Führungsrad ausgebildet ist. Insbesondere ist das Führungsrad kugelgelagert bzw. ist aus einem Kugellager gebildet. Das Führungsrad weist den Vorteil geringer Reibung auf, so dass der mechanische Verschleiß von Führungselement und Kulissenführung minimiert und so die Standzeit der erfindungsgemäßen Vorrichtung erhöht wird. Ein weiterer Vorteil besteht darin, dass die auftretenden Kräfte stark reduziert werden.

Gemäß einer weiteren bevorzugten Ausführungsform sind die Arbeitstaktführungsbahn und die Rücklaufführungsbahn der Kulissenführung jeweils als Führungsausnehmungen eingerichtet, in denen das Führungsrad geführt wird. Durch die Führungsausnehmung wird das Führungselement präzise und - wo erforderlich - beidseitig geführt.

Eine weitere zweckmäßige Ausgestaltung der Erfindung ist dadurch gekennzeichnet, dass die Führungsausnehmungen an den jeweiligen Übergangsbereichen zwischen der Arbeitstaktführungsbahn und der Rücklaufführungsbahn ein vorbestimmtes Übermaß gegenüber dem Führungsrad aufweisen. Dies bietet den Vorteil, dass gerade an den Umlenkpunkten, an denen die Bewegungsrichtungen wechseln, nämlich die des Längsschlitten in Förderrichtung und umgekehrt sowie die des Querschlittens zu den Artikeln hin und wieder zurück quer zu der Förderrichtung, das Führungselement nicht mehr im Anlagekontakt mit der Kulissenführung ist.

Mit anderen Worten ist das Führungselement in den vorgenannten Umlenkungspunkten nicht mit der Kulissenführung im Führungseingriff. Die Führung wird also in den Umlenkungspunkten "lose". Vorteilhafter Weise werden so starke schlagartig wirkende Kräfte auf die Kulissenführung vermieden und insgesamt ein ruhigerer Bewegungsablauf erzielt sowie das Auftreten hoher impulsartiger Krafteinwirkungen sicher vermieden. Insgesamt wird so die Vibrationsneigung der gesamten Vorrichtung verbessert.

Eine bevorzugte Weiterbildung der Erfindung zeichnet sich dadurch aus, dass in der Führungsausnehmung schwenkbare Leitelemente angeordnet sind, nämlich ein erstes Leitelement anfangspositionsseitig im Bereich des Übergangs von der Rücklaufführungsbahn zu der Arbeitstaktführungsbahn sowie ein zweites Leitelement endpositionsseitig im Bereich des Übergangs von der Arbeitstaktführungsbahn zu der Rücklaufführungsbahn. Mittels der Leitelemente wird sichergestellt, dass das Führungselement stets von der Rücklaufführungsbahn in die Arbeitstaktführungsbahn und umgekehrt wechselt. So wird bei jedem Takt stets eine präzise Führung gewährleistet.

Gemäß einer weiteren bevorzugten Ausbildung der Erfindung sind die ersten und zweiten Leitelemente jeweils aus der Bahnebene der Führungsausnehmungen heraus- und in diese hineinschwenkbar angeordnet. So kann das Führungselement die jeweilige Führungsbahn blockadefrei passieren.

Gemäß einer weiteren bevorzugten Ausführungsform der Erfindung umfasst das erste Leitelement ein Rücklaufführungsbahn-Sperrelement, das ausgebildet und eingerichtet ist, das Führungselement während des Rücklauftaktes durch Schwenken aus der Bahnebene der Rücklaufführungsbahn heraus passieren zu lassen, und nach dem Passieren des Führungselements durch Hineinschwenken zumindest des Rücklaufführungsbahn-Sperrelements in die Bahnebene der Führungsausnehmung der Rücklaufführungsbahn die Rücklaufführungsbahn für eine Passage des Führungselements während des Arbeitstakts zu sperren.

Das Rücklaufführungsbahn-Sperrelement ist also eingerichtet, das Führungselement dann Passieren zu lassen, wenn sich das Führungselement in der Rücklaufführungsbahn entgegen der Förderrichtung bewegt. Bei einer Bewegung des Führungselements in der Förderrichtung bildet das in die Bahnebene der Führungsausnehmung hereingeschwenkte Rücklaufführungsbahn-Sperrelement eine Wandung der Führungsausnehmung und leitet das Führungselement in die Arbeitstaktführungsbahn. So wird sichergestellt, dass das Führungselement stets präzise von der Rücklaufführungsbahn in die Arbeitstaktführungsbahn geleitet wird.

Eine weitere zweckmäßige Ausbildung der Erfindung ist dadurch gekennzeichnet, dass das Rücklaufführungsbahn-Sperrelement ein erstes Führungselement-Tastteil und ein Arbeitstaktführungsbahn-Teil umfasst, wobei das erste Führungselement-Tastteil rampenförmig mit entgegen der Förderrichtung zunehmender Breite ausgebildet ist, und wobei das Arbeitstaktführungsbahn-Teil mindestens einen ersten Wandabschnitt der Arbeitstaktführungsbahn bildet. Das erste Führungselement-Tastteil mit der genannten Rampenform bietet den Vorteil, dass das Führungselement über das erste Führungselement-Tastteil unter gleichzeitigem Verschwenken hinübergleitet. Das erste Führungselement-Tastteil ermöglicht so die Passage des Führungselements während sich dieses entgegen der Förderrichtung bewegt. Das Arbeitstaktführungsbahn-Teil bildet dagegen im nicht ausgelenkten Zustand den ersten Wandabschnitt der Arbeitstaktführungsbahn. Auf diese Weise wird das Führungselement stets sicher von der Rücklaufführungsbahn in die Arbeitstaktführungsbahn überführt.

Gemäß einer weiteren bevorzugten Ausführungsform umfasst das zweite Leitelement ein Arbeitstaktführungsbahn-Sperrelement, das ausgebildet und eingerichtet ist, das Führungselement während des Arbeitstakts durch Schwenken aus der Bahnebene der Arbeitstaktführungsbahn heraus passieren zu lassen, und nach dem Passieren des Führungselements durch Hineinschwenken zumindest des Arbeitstaktführungsbahn-Sperrelements in die Bahnebene der Führungsausnehmung der Arbeitstaktführungsbahn die Arbeitstaktführungsbahn für eine Passage des Führungselements während des Rücklauftaktes zu sperren. Das Arbeitstaktführungsbahn-Sperrelement stellt - in analoger Weise zu dem Rücklaufführungsbahn-Sperrelement - sicher, dass das Führungselement stets präzise von der Arbeitstaktführungsbahn in die Rücklaufführungsbahn geleitet wird.

Das Arbeitstaktführungsbahn-Sperrelement ist also eingerichtet, das Führungselement dann Passieren zu lassen, wenn sich das Führungselement in der Arbeitstaktführungsbahn mit der Förderrichtung bewegt. Bei einer Bewegung des Führungselements in der Förderrichtung bildet das in die Bahnebene der Führungsausnehmung hereingeschwenkte Arbeitstaktführungsbahn-Sperrelement eine Wandung der Führungsausnehmung und leitet das Führungselement in die Rücklaufführungsbahn.

Eine weitere zweckmäßige Ausgestaltung der Erfindung ist dadurch gekennzeichnet, dass das Arbeitstaktführungsbahn-Sperrelement ein zweites Führungselement-Tastteil und ein Rücklaufführungsbahn-Teil umfasst, wobei das zweite Führungselement-Tastteil rampenförmig mit in Förderrichtung zunehmender Breite ausgebildet ist, und wobei das Rücklaufführungsbahn-Teil mindestens einen zweiten Wandabschnitt der Rücklaufführungsbahn bildet. Das zweite Führungselement-Tastteil mit der genannten Rampenform bietet den Vorteil, dass das Führungselement über das zweite Führungselement-Tastteil unter gleichzeitigem Verschwenken hinübergleitet. Das zweite Führungselement-Tastteil ermöglicht so die Passage des Führungselements während sich dieses mit der Förderrichtung bewegt. Das Rücklaufführungsbahn-Teil bildet dagegen im nicht ausgelenkten Zustand den ersten Wandabschnitt der Rücklaufführungsbahn. Auf diese Weise wird das Führungselement stets sicher von der Arbeitstaktführungsbahn in die Rücklaufführungsbahn überführt.

Gemäß einer weiteren bevorzugten Ausbildung der Erfindung sind das erste Leitelement und das zweite Leitelement derart ausgebildet, dass diese selbsttätig in die Bahnebene zurückschwenken. Vorteilhafter Weise findet so nach der Passage des Führungselements eine selbsttätige Verriegelung der jeweiligen Führungsbahn statt. Beispielsweise sind die ersten und zweiten Leitelemente derart eingerichtet, dass dieses schwerkraftbedingt selbsttätig zurückschwenken.

Eine weitere zweckmäßige Ausbildung der Erfindung ist dadurch gekennzeichnet, dass an dem ersten Leitelement und/oder an dem zweiten Leitelement Rückstellmittel angeordnet sind, die eingerichtet sind, diese selbsttätig in die Bahnebene zurückzuschwenken. Dies bietet den Vorteil, dass durch Wahl der Rückstellmittel die Rückstellkraft einstellbar ist. Je nach Größe der Rückstellkraft kann die Dauer des Zurückschwenkens angespasst werden. Eine Erhöhung der Rückstellkraft bewirkt ein rascheres Zurückstellen, so dass auch bei großen Fördergeschwindigkeiten der Rückstellvorgang schnell genug erfolgt.

Gemäß einer weiteren bevorzugten Ausführungsform umfasst die Fördereinrichtung eine Förderkette, an der die Aufnahmeelemente angeordnet sind, sowie einen Antrieb zum Antreiben der Förderkette, wobei der Antrieb mindestens einen endlos umlaufenden Riemen- oder Kettentrieb umfasst, mit dem der Längsschlitten mittels einer Koppelstange gekoppelt ist. So wird der Bewegungsablauf des Längsschlittens mechanisch an die Bewegung der Förderreinrichtung starr gekoppelt. Dies bietet den Vorteil absoluter Synchronität zwischen der erfindungsgemäßen Positioniereinrichtung und den Aufnahmeelementen der Fördereinrichtung. Vorzugsweise umfasst der Antrieb einen Antriebsmotor zum Antreiben der Förderkette der Fördereinrichtung. Der Riemen- oder Kettentrieb ist mechanisch mit der Förderkette gekoppelt. Der Riemen- und/oder Kettentrieb wird in diesem Fall durch die Förderkette angetrieben.

Etwaige Schwankungen der Fördergeschwindigkeit werden so synchron auf den Bewegungsablauf des Längsschlittens sowie des Querschlittens übertragen. Auf diese Weise ist stets gewährleistet, dass die Bewegungen des Längs- und Querschlittens synchronisiert zur Fördergeschwindigkeit erfolgen.

Eine weitere zweckmäßige Ausgestaltung der Erfindung ist dadurch gekennzeichnet, dass die Positioniereinheit eine Längsschlitten-Federeinheit umfasst, die ausgebildet und eingerichtet ist, beim Erreichen einer vorgegebenen Rücklaufposition des Längsschlittens während eines Rücklauftakts zwischen dem Längsschlitten und dem Trägerelement federvorgespannt zu werden. Die Längsschlitten-Federeinheit bietet den Vorteil, dass der Längsschlitten sanft abgebremst wird. Zudem akkumuliert die Längsschlitten-Federeinheit mechanische Energie während des Rücklauftaktes, die im Anschluss zu Beginn des Arbeitstaktes den Beschleunigungsvorgang des Längsschlittens sowie des Querschlittens unterstützt.

Die Längsschlitten-Federeinheit unterstützt auf diese Weise den Antrieb der erfindungsgemäßen Positioniereinheit. Hierdurch werden im Antriebsstrang wirkende Antriebskräfte deutlich reduziert. Insgesamt wird ein extrem vibrationsarmer Bewegungsablauf mit großer Laufruhe erreicht. Vorzugsweise ist die Längsschlitten-Federeinheit derart ausgebildet, dass diese über eine Wegstrecke von mindestens zwei Dritteln der gesamtem Rücklaufstrecke federvorgespannt wird.

Gemäß einer weiteren bevorzugten Ausbildung der Erfindung umfasst die Längsschlitten-Federeinheit mindestens ein Längs-Federelement, das einseitig an dem Trägerelement angeordnet ist und dessen eine freie Längs-Federelement-Seite eingerichtet ist, mit einem an dem Längsschlitten angeordneten Längs-Gegenlageelement beim Erreichen der vorgegebenen Rücklaufposition in mechanischen Anlagekontakt zu gelangen. Das Längs-Federelement wird so beim Erreichen der vorgegebenen Rücklaufposition federvorgespannt. Auf dem übrigen Teil der Rücklaufstrecke befindet sich das Längs-Federelement nicht in mechanischem Eingriff und ist entspannt.

Alternativ umfasst die Längsschlitten-Federeinheit mindestens ein Längs-Federelement, das einseitig an dem Längsschlitten angeordnet ist und dessen eine freie Längs-Federelement-Seite eingerichtet ist, mit einem an dem Trägerelement angeordneten Längs-Gegenlageelement beim Erreichen der vorgegebenen Rücklaufposition in mechanischen Anlagekontakt zu gelangen. Vorzugsweise ist das mindestens eine Längs-Federelement als Druckfeder oder als Zugfeder ausgebildet.

Eine weitere zweckmäßige Ausbildung der Erfindung ist dadurch gekennzeichnet, dass die Positioniereinheit eine Querschlitten-Federeinheit umfasst, die ausgebildet und eingerichtet ist, beim Erreichen einer vorgegebenen Auslenkposition des Querschlittens während eines Arbeitstakts zwischen dem Querschlitten und dem Längsschlitten federvorgespannt zu werden. Die zuvor genannten Vorteile der Längsschlitten-Federeinheit gelten in analoger Weise auch für die Querschlitten-Federeinheit. Die Querschlitten-Federeinheit bietet einerseits den Vorteil eines sanften Abbremsens des Querschlittens beim Übergang vom Arbeits- in den Rücklauftakt. Andererseits ist die Querschlitten-Federeinheit eingerichtet, während des Arbeitstaktes, vorgespannt zu werden, um mechanische Energie zu speichern, die mit Beginn des Rücklauftaktes zum Beschleunigen des Querschlittens genutzt wird.

Gemäß einer weiteren bevorzugten Ausführungsform umfasst die Querschlitten-Federeinheit mindestens ein Quer-Federelement, das einseitig an dem Längsschlitten angeordnet ist und dessen eine freie Quer-Federelement-Seite eingerichtet ist, mit einem an dem Querschlitten angeordneten Quer-Gegenlageelement beim Erreichen der vorgegebenen Auslenkposition in mechanischen Anlagekontakt zu gelangen. Bis zum Erreichen der vorgegebenen Auslenkposition steht das Quer-Federelement in keinem mechanischen wirkenden Kontakt mit dem Querschlitten.

Ein Vorspannen des Quer-Federelements findet erst mit Erreichen der vorgegebenen Auslenkposition statt. Dies bietet den Vorteil, dass gerade zu Beginn der Beschleunigungsphase keine zusätzliche Spannarbeit durch den Antrieb zu verrichten ist. Erst nachdem der Querschlitten quer zu der Förderrichtung eine gewisse Geschwindigkeit aufweist, wird ein Teil der Antriebsenergie dazu verwendet, Spannarbeit zum Vorspannen des Quer-Federelements zu leisten. Vorzugsweise befindet sich die vorgegebene Auslenkposition bei ca. 1/3 der gesamten Vorlaufstrecke während des Arbeitstaktes. D.h. auf dem ersten Drittel der Vorlaufstrecke findet kein Vorspannen des Quer-Federelements statt. Auf 2/3 der Vorlaufstrecke wird diese vorgespannt.

Gemäß einer weiteren bevorzugten Ausbildung der Erfindung umfasst die Querschlitten-Federeinheit mindestens ein Quer-Federelement, das einseitig an dem Querschlitten angeordnet ist und dessen eine freie Quer-Federelement-Seite eingerichtet ist, mit einem an dem Längsschlitten angeordneten Quer-Gegenlageelement beim Erreichen der vorgegebenen Auslenkposition in mechanischen Anlagekontakt zu gelangen. Diese bevorzugte Ausführungsform ist eine alternative Ausführung zu der zuvor genannten bevorzugten Ausführungsform. Das Quer-Federelement kann also wahlweise einseitig an dem Längsschlitten oder an dem Querschlitten angeordnet sein. Weiter bevorzugt ist das mindestens eine Quer-Federelement als Druckfeder oder als Zugfeder ausgebildet.

Gemäß einer weiteren bevorzugten Ausführungsform ist das Trägerelement quer zu der Förderrichtung positionsverstellbar eingerichtet. Auf diese Weise kann die Positioniereinheit quer zu der Förderrichtung optimal ausgerichtet und der Abstand zwischen den Bearbeitungswerkzeugen an unterschiedliche Artikeltypen optimal angepasst werden.

Weiterhin betrifft die Erfindung die eingangs genannte Anordnung zum Entfernen des Gabelbeins von Geflügelschlachtkörpern, die eine genannte Vorrichtung zur mitlaufenden Werkzeugpositionierung linear geförderter Artikel umfasst, wobei die Artikel Geflügelschlachtkörper sind, die Aufnahmeelemente zum Halten jeweils eines der Geflügelschlachtkörper mit seiner Halsseite zu der Bearbeitungsstation weisend eingerichtet sind, und das mindestens eine Bearbeitungswerkzeug als eine Gabelbeinentfernungseinheit ausgebildet ist.

Dies bietet den Vorteil, dass die mindestens eine Gabelbeinentfernungseinheit mittels der erfindungsgemäßen Vorrichtung präzise und möglichst schnell positionierbar eingerichtet ist. Mittels der Positioniereinheit der erfindungsgemäßen Vorrichtung werden die mindestens eine Gabelbeinentfernungseinheit während des Arbeitstaktes einerseits parallel und synchron zu den in Förderrichtung geförderten Aufnahmeelementen bewegt. Andererseits wird die mindestens eine Gabelbeinentfernungseinheit quer zu der Förderrichtung im Wege einer Zustellbewegung zu den Aufnahmeelementen hinbewegt, um die Gabelbeinentfernungseinheit in eine zur Bearbeitung erforderliche nahe Stelle zu den Geflügelschlachtkörpern zu bringen.

Die Gabelbeinentfernungseinheit selbst braucht daher keine eigene Zustellbewegung zu den Geflügelschlachtkörpern auszuführen. Deren Bewegungsablauf kann daher auf die notwendige Bewegung der mit dem Geflügelkörper wechselwirkenden Trenneinrichtungen beschränkt werden, so dass diese entsprechend rasch durchgeführt werden. Auf diese Weise kann die Durchsatzleistung, also die Anzahl der pro Zeiteinheit bearbeitbaren Geflügelschlachtkörper, deutlich gesteigert und die Fördereinrichtung mit entsprechend hoher Fördergeschwindigkeit betrieben werden.

Des Weiteren wird die Aufgabe durch das entsprechende eingangs genannte Verfahren zur mitlaufenden Werkzeugpositionierung linear geförderter Artikel gelöst, umfassend die Schritte:
Fördern der Artikel in eine Förderrichtung mit einer Mehrzahl zum Halten der Artikel eingerichteten Aufnahmeelementen entlang einer Förderstrecke, an der eine Bearbeitungsstation mit mindestens einem zum Bearbeiten der Artikel eingerichteten Bearbeitungswerkzeug angeordnet ist, mittels einer die Förderstrecke bildenden Fördereinrichtung, wobei die Bearbeitungsstation eine zum Positionieren des mindestens einen Bearbeitungswerkzeugs eingerichtete Positioniereinheit aufweist, wobei die Positioniereinheit durch einen in Förderrichtung gegenüber einem Trägerelement schiebebeweglichen Längsschlitten sowie einen daran quer zu der Förderrichtung schiebebeweglichen angeordneten Querschlitten gebildet ist; oszillierendes Antreiben des Längsschlittens derart, dass der Längsschlitten einerseits in einem Arbeitstakt synchron mit den Aufnahmeelementen in der Förderrichtung von einer Anfangsposition in eine Endposition mitläuft und andererseits in einem Rücklauftakt von der Endposition in die Anfangsposition entgegen der Förderrichtung rückläuft; und Bewegen des Querschlittens während des Arbeitstakts quer zu der Förderrichtung aus einer Warteposition zu den Aufnahmeelementen hin in eine Arbeitsposition und aus der Arbeitsposition zurück in die Warteposition mittels mindestens eines in eine ortsfest angeordnete Kulissenführung eingreifenden Führungselements; und auslenkungsfreies Führen des Querschlittens während des Rücklauftaktes quer zu der Förderrichtung mittels der Kulissenführung. Die Vorteile des erfindungsgemäßen Verfahrens sind bereits zuvor im Zusammenhang mit der erfindungsgemäßen Vorrichtung eingehend erläutert worden. Aufgrund der zur Vorrichtung analogen Verfahrensschritte wird an dieser Stelle und zu den im Folgenden beschriebenen vorteilhaften Weiterbildungen des erfindungsgemäßen Verfahrens auf die bereits im Zusammenhang mit der Vorrichtung genannten Vorteile verwiesen.

Eine weitere zweckmäßige Ausbildung der Erfindung ist gekennzeichnet durch Bewegen des Querschlittens während des Arbeitstaktes mittels mindestens einer Arbeitstaktführungsbahn der Kulissenführung und Bewegen des Querschlittens während des Rücklaufstaktes mittels einer Rücklaufführungsbahn, die sich linear erstreckt und parallel zu der Förderstrecke verläuft.

Gemäß einer weiteren bevorzugten Ausbildung der Erfindung erfolgt das Bewegen des Querschlittens mittels der als Kurvenbahn ausgebildeten Arbeitstaktführungsbahn.

Gemäß einer weiteren bevorzugten Ausführungsform ist das Führungselement als Führungsrad ausgebildet, das rollend entlang der Kulissenführung geführt wird.

Eine weitere zweckmäßige Ausgestaltung der Erfindung ist dadurch gekennzeichnet, dass die Arbeitstaktführungsbahn und die Rücklaufführungsbahn der Kulissenführung Führungsausnehmungen bilden, in denen das Führungsrad geführt wird.

Gemäß einer weiteren bevorzugten Ausbildung der Erfindung läuft das Führungsrad an den jeweiligen Übergangsbereichen zwischen der Arbeitstaktführungsbahn und der Rücklaufführungsbahn in den jeweiligen Führungsausnehmungen zumindest im Wesentlichen führungsfrei.

Eine weitere zweckmäßige Ausbildung der Erfindung ist gekennzeichnet durch Verschwenken von in der Führungsausnehmung schwenkbar angeordneten Leitelementen, nämlich einem ersten Leitelement, das anfangspositionsseitig im Bereich des Übergangs von der Rücklaufführungsbahn zu der Arbeitstaktführungsbahn angeordnet ist sowie einem zweiten Leitelement, das endpositionsseitig im Bereich des Übergangs von der Arbeitstaktführungsbahn zu der Rücklaufführungsbahn angeordnet ist.

Eine weitere zweckmäßige Ausgestaltung ist gekennzeichnet durch Schwenken der ersten und der zweiten Leitelemente jeweils aus der Bahnebene der Führungsausnehmungen heraus und in diese hinein.

Eine bevorzugte Weiterbildung der Erfindung ist gekennzeichnet durch Schwenken eines Rücklaufführungsbahn-Sperrelements des ersten Leitelements aus der Bahnebene der Führungsausnehmung der Rücklaufführungsbahn heraus während des Rücklauftakts beim Passieren des Führungselements, um das Führungselement passieren zu lassen, und Hineinschwenken zumindest des Rücklaufführungsbahn-Sperrelements in die Bahnebene der Führungsausnehmung der Rücklaufführungsbahn nach dem Passieren des Führungselements, um die Rücklaufführungsbahn für eine Passage des Führungselements während des Arbeitstakts zu sperren.

Eine weitere zweckmäßige Ausgestaltung der Erfindung ist dadurch gekennzeichnet, dass das Schwenken aus der Bahnebene dadurch erfolgt, dass das Führungselement mit einem rampenförmigen, sich in Förderrichtung verbreiternden, ersten Führungselement-Tastteil des Rücklaufführungsbahn-Sperrelementes in Kontakt kommt, so dass dieses aus der Bahnebene herausgeschwenkt wird und zum Sperren der Rücklaufführungsbahn während des Arbeitstaktes ein Arbeitstaktführungsbahn-Teil des Rücklaufführungsbahn-Sperrelements mindestens einen ersten Wandabschnitt der Arbeitstaktführungsbahn bildet.

Eine weitere zweckmäßige Ausgestaltung der Erfindung ist gekennzeichnet durch Schwenken eines Arbeitstaktführungsbahn-Sperrelements des zweiten Leitelements aus der Bahnebene der Arbeitstaktführungsbahn heraus während des Arbeitstakts beim Passieren des Führungselements, um das Führungselement passieren zu lassen, und Hineinschwenken zumindest des Arbeitstaktführungsbahn-Sperrelements in die Bahnebene der Arbeitstaktführungsbahn nach dem Passieren des Führungselements, um die Arbeitstaktführungsbahn für eine Passage des Führungselements während des Rücklauftakts zu sperren.

Eine bevorzugte Weiterbildung der Erfindung zeichnet sich dadurch aus, dass das Schwenken aus der Bahnebene heraus dadurch erfolgt, dass das Führungselement mit einem rampenförmigen, sich in Förderrichtung verbreiternden, zweiten Führungselement-Tastteil des Arbeitstaktführungsbahn-Sperrelementes in Kontakt kommt, so dass dieses aus der Bahnebene herausgeschwenkt wird und zum Sperren der Arbeitstaktführungsbahn während des Rücklauftaktes ein Arbeitstaktführungsbahn-Teil des Arbeitstaktführungsbahn-Sperrelements mindestens einen zweiten Wandabschnitt der Rücklaufführungsbahn bildet.

Gemäß einer weiteren bevorzugten Ausbildung der Erfindung schwenken das erste Leitelement und das zweite Leitelement selbsttätig in die Bahnebene zurück.

Gemäß einer weiteren bevorzugten Ausführungsform wird das selbsttätige Zurückschwenken durch an dem ersten Leitelement und/oder an dem zweiten Leitelement angeordnete Rückstellmittel bewirkt.

Eine weitere zweckmäßige Ausbildung der Erfindung ist dadurch gekennzeichnet, dass das oszillierende Antreiben des Längsschlittens über eine Koppelstange erfolgt, die mit einem endlos umlaufenden Riemen- oder Kettentrieb gekoppelt ist, der eine Förderkette antreibt, an der die Aufnahmeelemente der Fördereinrichtung angeordnet sind.

Eine weitere zweckmäßige Ausgestaltung der Erfindung ist gekennzeichnet durch Federvorspannen einer zwischen dem Längsschlitten und dem Trägerelement wirkenden Längsschlitten-Federeinheit, die Teil der Positioniereinheit ist, beim Erreichen einer vorgegebenen Rücklaufposition des Längsschlittens während eines Rücklauftakts.

Eine bevorzugte Weiterbildung der Erfindung zeichnet sich dadurch aus, dass das Federvorspannen der Längsschlitten-Federeinheit mittels mindestens eines Längs-Federelements bewirkt wird, das einseitig an dem Trägerelement angeordnet ist und dessen eine freie Längs-Federelement-Seite mit einem an dem Längsschlitten angeordneten Längs-Gegenlageelement beim Erreichen der vorgegebenen Rücklaufposition in mechanischen Anlagekontakt gelangt.

Eine zweckmäßige Ausgestaltung der Erfindung ist dadurch gekennzeichnet, dass das Federvorspannen der Längsschlitten-Federeinheit mittels des mindestens einen Längs-Federelements bewirkt wird, das einseitig am dem Längsschlitten angeordnet ist und dessen eine freie Längs-Federelement-Seite mit einem an dem Trägerelement angeordneten Längs-Gegenlageelement beim Erreichen der vorgegebenen Rücklaufposition in mechanischen Anlagekontakt gelangt.

Eine weitere zweckmäßige Ausbildung der Erfindung ist gekennzeichnet durch Federvorspannen einer zwischen dem Querschlitten und dem Längsschlitten wirkenden Querschlitten-Federeinheit beim Erreichen einer vorgegebenen Auslenkposition des Querschlittens.

Eine zweckmäßige Ausgestaltung der Erfindung ist dadurch gekennzeichnet, dass das Federvorspannen der Querschlitten-Federeinheit mittels mindestens eines Quer-Federelements bewirkt wird, das einseitig an dem Längsschlitten angeordnet ist und dessen eine freie Quer-Federelement-Seite mit einem an dem Querschlitten angeordneten Quer-Gegenlageelement beim Erreichen der vorgegebenen Auslenkposition in mechanischen Anlagekontakt gelangt.

Gemäß einer weiteren bevorzugten Ausführungsform wird das Federvorspannen der Querschlitten-Federeinheit mittels des mindestens einen Quer-Federelements bewirkt, das einseitig an dem Querschlitten angeordnet ist und dessen eine freie Quer-Federelement-Seite mit einem an dem Längsschlitten angeordneten Quer-Gegenlageelement beim Erreichen der vorgegebenen Auslenkposition in mechanischen Anlagekontakt gelangt.

Gemäß einer weiteren bevorzugten Ausbildung der Erfindung ist die Position des Trägerelements quer zu der Förderrichtung einstellbar.

Weiterhin betrifft die Erfindung ein Verfahren zum Entfernen des Gabelbeins von Geflügelschlachtkörpern, gekennzeichnet durch Durchführen der Schritte des Verfahrens zur mitlaufenden Werkzeugpositionierung linear geförderter Artikel, wobei die Artikel Geflügelschlachtkörper sind, jeweils einer der Geflügelschlachtkörper mit seiner Halsseite zu der Bearbeitungsstation weisend mittels der Aufnahmeelemente gehalten wird, und mittels des mindestens einen Bearbeitungswerkzeugs, das als eine Gabelbeinentfernungseinheit ausgebildet ist, das Gabelbein des Geflügelschlachtkörpers entfernt wird.

Weitere bevorzugte und/oder zweckmäßige Merkmale und Ausgestaltungen der Erfindung ergeben sich aus den Unteransprüchen und der Beschreibung. Besonders bevorzugte Ausführungsformen werden anhand der beigefügten Zeichnungen näher erläutert. In den Zeichnungen zeigt:
- Fig. 1: eine perspektivische Ansicht der erfindungsgemäßen Anordnung,
- Fig. 2: eine perspektivische Ansicht der in Fig. 1 gezeigten Anordnung mit Blickrichtung auf die Unterseite,
- Fig. 3: eine perspektivische Ansicht einer Gabelbeinentfernungseinheit,
- Fig. 4: eine Draufsicht der in Fig. 3 gezeigten Gabelbeinentfernungseinheit mit Blickrichtung von unten bei der die Werkzeuge sich in einer Warteposition befinden,
- Fig. 5: eine Draufsicht der in Fig. 3 gezeigten Gabelbeinentfernungseinheit mit Blickrichtung von unten bei der die Werkzeuge sich in einer Bearbeitungsposition befinden,
- Fig. 6: eine perspektivische Detailansicht der Kulissenführung während des Arbeitstaktes,
- Fig. 7 bis 9: die in Fig. 6 gezeigte Kulissenführung mit verschiedenen Positionen des Führungsrades beim Übergang von der Arbeitstaktführungsbahn in die Rücklaufführungsbahn,
- Fig, 10 bis 12: die in Fig. 6 gezeigte Kulissenführung mit verschiedenen Positionen des Führungsrades beim Übergang von der Rücklaufführungsbahn in die Arbeitstaktführungsbahn,
- Fig. 13: eine perspektivische Ansicht der erfindungsgemäßen Anordnung mit Blick auf die Längsschlitten-Federeinheit,
- Fig. 14: die in Fig. 13 gezeigte Anordnung mit Detailansicht des Längs-Federelements,
- Fig. 15: eine perspektivische Ansicht der erfindungsgemäßen Anordnung mit Blick auf die Querschlitten-Federeinheit und
- Fig. 16: eine Detailansicht der in Fig. 15 gezeigten Anordnung mit Blick auf das Quer-Federelement.

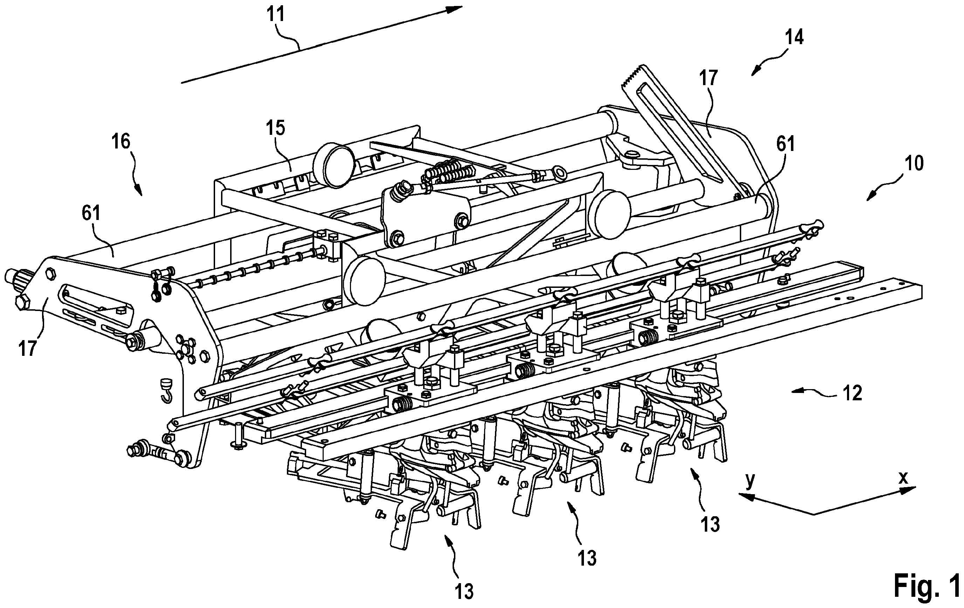

Anhand der nachfolgend beschriebenen Fig. 1 bis 16 werden die bevorzugte Ausführungsformen der erfindungsgemäßen Anordnung sowie der Vorrichtung näher beschrieben. Zur Vermeidung von Wiederholungen dient diese Beschreibung auch der näheren Darlegung der erfindungsgemäßen Verfahren. Auf die erfindungsgemäßen Verfahren wird nur dann gesondert eingegangen, wenn die jeweiligen Verfahrensschritte nicht analog zu der erfindungsgemäßen Vorrichtung bzw. Anordnung sind.

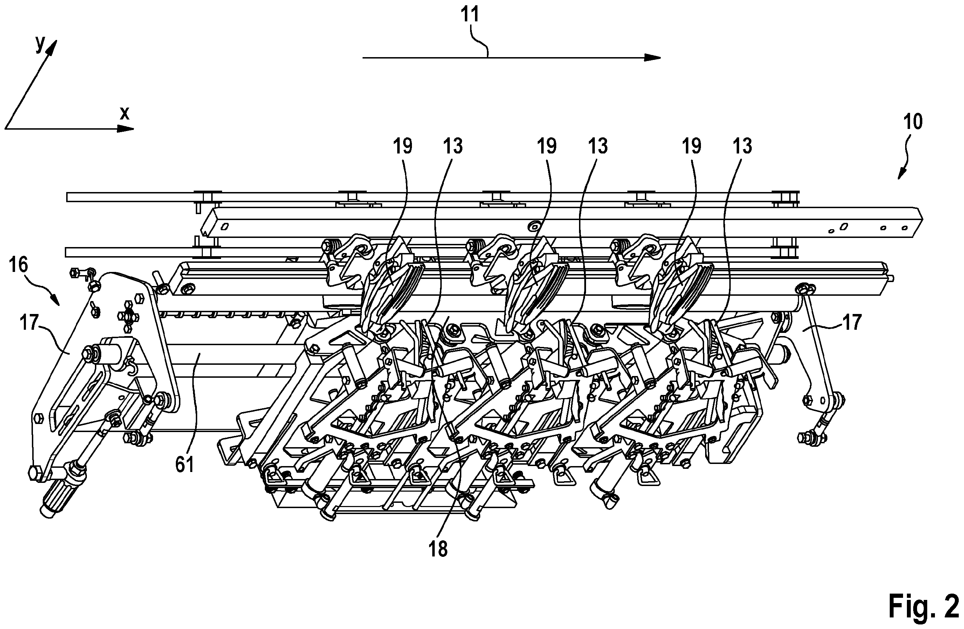

Fig. 1 zeigt eine perspektivische Ansicht der erfindungsgemäßen Anordnung. Diese umfasst eine Vorrichtung zur mitlaufenden Werkzeugpositionierung linear geförderter Artikel. Diese erfindungsgemäße Vorrichtung umfasst eine Fördereinrichtung 10, die eine Förderstrecke bildet. Die - in Fig. 1 nicht gezeigten Artikel - werden in eine Förderrichtung 11 gefördert. Hierzu weist die Fördereinrichtung 10 eine Mehrzahl von - in der Fig. 2 gezeigten - Aufnahmeelementen 19 auf, die zum Halten der Artikel eingerichtet sind. Die in Fig. 2 gezeigten Aufnahmeelemente 19 sind hier beispielhaft als Aufnahmesättel zum Halten von Geflügelschlachtkörpern ausgebildet. Die erfindungsgemäße Vorrichtung ist selbstverständlich nicht allein auf die Bearbeitung von Geflügelschlachtkörpern beschränkt. Die in Fig. 2 gewählte Darstellung dient lediglich der Veranschaulichung sowie der Erläuterung der erfindungsgemäßen Anordnung. Grundsätzlich eignet sich die erfindungsgemäße Vorrichtung zur Bearbeitung jeglicher Artikel, sofern die Aufnahmeelemente 19 jeweils entsprechend an diese Artikel angepasst werden.

Entlang der Förderstrecke ist mindestens eine Bearbeitungsstation 12 angeordnet, die zum Bearbeiten der Artikel eingerichtete Bearbeitungswerkzeuge 13 umfasst. In der Zeichnung ist beispielhaft eine Bearbeitungsstation 12 mit jeweils drei Bearbeitungswerkzeugen 13 gezeigt. Die Anzahl der Bearbeitungsstationen 12 ist grundsätzlich je nach Bedarf frei wählbar.

Die Bearbeitungsstation 12 weist eine zum Positionieren des mindestens einen Bearbeitungswerkzeugs 13 eingerichtete Positioniereinheit 14 auf. Die Positioniereinheit 14 umfasst einen Längsschlitten 15. Dieser ist in und entgegen der Förderrichtung 11 an einem Trägerelement 16 schiebebeweglich angeordnet. Das Trägerelement 16 wird von zwei Seitenteilen 17 und mindestens zwei Laufelementen 61 gebildet. Der Längsschlitten 15 wird in der Förderrichtung 11 mittels der Laufelemente 61 geführt. Die Laufelemente 61 bilden mit den Seitenteilen 17 das auf diese Weise rahmenartig ausgebildete Trägerelement 16.

In Fig. 2 ist ein Querschlitten 18 gezeigt, der an dem Längsschlitten 15 quer zu der Förderrichtung 11 schiebebeweglich angeordnet ist. Auf diese Weise ist es möglich, den Querschlitten quer zu der Förderrichtung 11, also in y-Richtung sowie den Längsschlitten in der Förderrichtung, also in x-Richtung, zu positionieren.

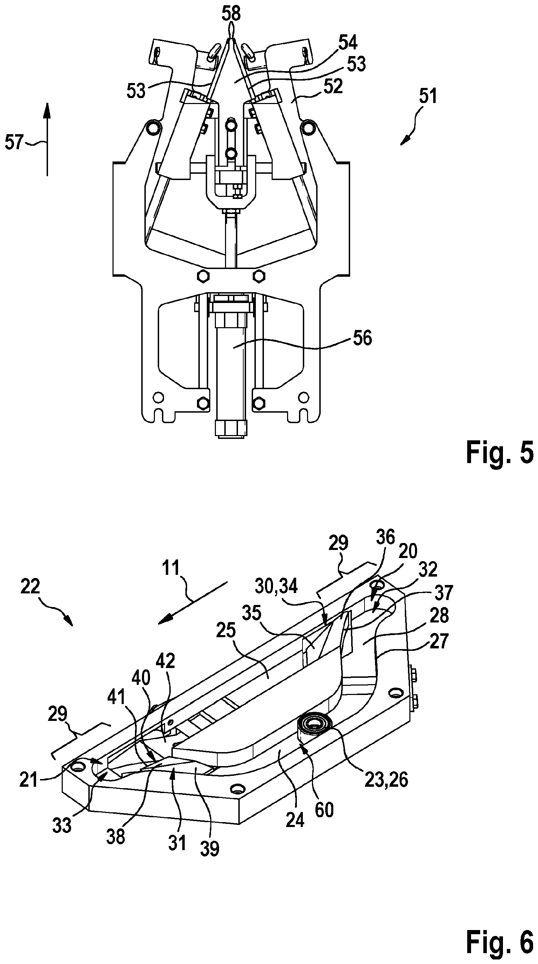

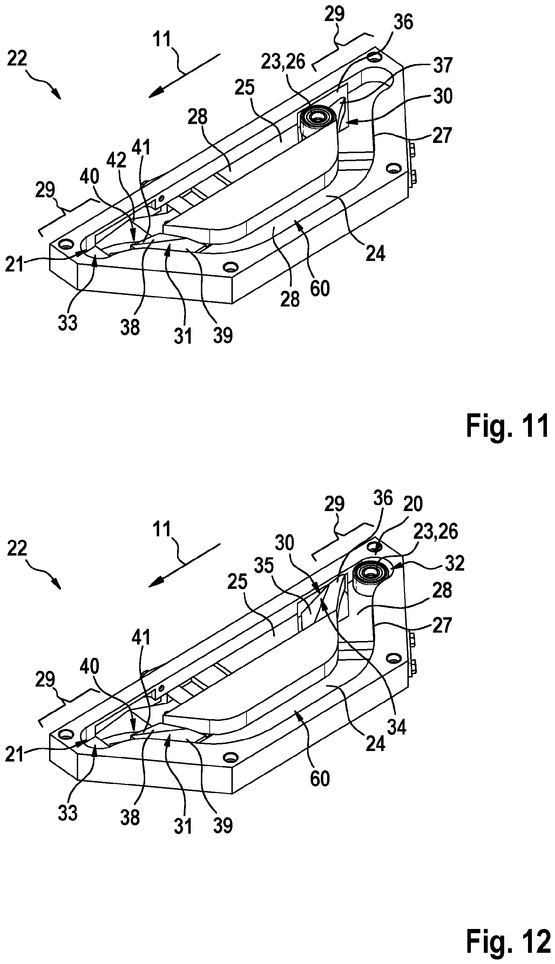

Der Längsschlitten 15 ist oszillierend derart angetrieben, dass der Längsschlitten 15 einerseits in einem Arbeitstakt synchron mit den Aufnahmeelementen 19 in der Förderrichtung 11 von einer - in Fig. 12 gezeigten - Anfangsposition 20 in eine - in Fig. 6 gezeigten - Endposition 21 mitläuft. Weiter ist der - in der Zeichnung nicht gezeigte - Antrieb ausgebildet, dass der Längsschlitten 15 in einem Rücklauftakt von der Endposition 21 in die Anfangsposition 20 entgegen der Förderrichtung rückläuft.

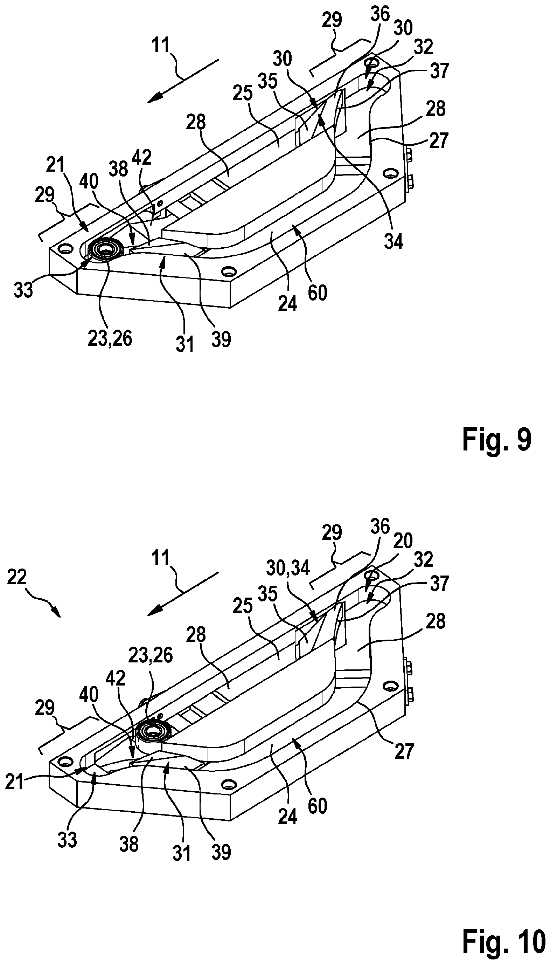

Die Fig. 6 bis 12 zeigen eine ortsfest angeordnete Kulissenführung 22, in die ein Führungselement 23 des Querschlittens 18 eingreift. Die Kulissenführung 22 ist daher ausgebildet, während des Arbeitstakts den Querschlitten 18 quer zu der Förderrichtung 11 aus einer Warteposition zu den Aufnahmeelementen 19 hin in eine Arbeitsposition 60 und aus der Arbeitsposition 60 zurück in die Warteposition zu bewegen. Der Ablauf ist in schematischer Abfolge in den Fig. 6 bis 12 anhand der jeweiligen Positionen des Führungselements 23 indirekt gezeigt. Weiter ist die Kulissenführung 22 eingerichtet, während des Rücklauftakts den Querschlitten 18 quer zu der Förderrichtung 11 auslenkungsfrei zu führen. Dieser Bewegungsablauf ist wiederum schematisch anhand der Positionen des Führungselements 23 in den Fig. 9 bis 12 indirekt dargestellt.

Wie in den Fig. 6 bis 12 dargestellt, umfasst die Kulissenführung 22 vorzugsweise mindestens eine Arbeitstaktführungsbahn 24 und eine Rücklaufführungsbahn 25. Die Rücklaufführungsbahn 25 ist parallel zu der Förderstrecke ausgerichtet und erstreckt sich parallel zu dieser linear. Die Arbeitstaktführungsbahn 24 erstreckt sich ausgehend von der Rücklaufführungsbahn 25 jeweils von der Anfangsposition 20 und der Endposition 21 zu der Arbeitsposition 60 des Längsschlittens hin. Anders ausgedrückt ist die Arbeitstaktführungsbahn 25 so ausgebildet, dass diese zu ihrer Mitte hin quer zu der Förderrichtung 11 in Richtung der Aufnahmeelemente 19 hinführend eingerichtet ist, um die Auslenkung des Querschlittens 18 zu bewerkstelligen.

Besonders bevorzugt ist die Arbeitstaktführungsbahn 24 als eine Kurvenbahn 27 ausgebildet. Beispielsweise ist die Kurvenbahn 27, wie in der Zeichnung gezeigt, als Doppel-S-Kurve ausgeführt, deren maximale Auslenkung in Richtung quer zu der Förderrichtung 11 mittig in der Kurvenbahn 27 eingerichtet ist. Insbesondere ist die Kurvenbahn 27 absatzfrei eingerichtet. Die Kurvenbahn 27 weist daher keine Unstetigkeitsstellen auf. Die Kurvenbahn 27 ist folglich sprungstellenfrei ausgebildet.

Das Führungselement 23 ist vorzugsweise als Führungsrad 26 ausgebildet. Das Führungsrad 26 wird so mittels der Kurvenbahn 27 mit möglichst geringer Reibung geführt. Insbesondere ist das Führungsrad 26 kugelgelagert oder als Kugellager ausgebildet.

Die Arbeitstaktführungsbahn 24 und die Rücklaufführungsbahn 25 der Kulissenführung sind jeweils als Führungsausnehmungen 28 eingerichtet und ausgebildet, das Führungselement 23 bzw. das Führungsrad 26 zu führen. Vorzugsweise gehen die Führungsausnehmungen 28 der Arbeitstaktführungsbahn 24 und der Rücklaufführungsbahn 25 ineinander über und bilden so eine geschlossene Führungsbahn.

Bevorzugt weisen die Führungsausnehmungen 28 an den jeweiligen Übergangsbereichen 29 zwischen der Arbeitstaktführungsbahn 24 und der Rücklaufführungsbahn 25 ein vorbestimmtes Übermaß gegenüber dem Führungsrad 26 auf. Dies bietet den Vorteil, dass insbesondere an den Umkehrpunkten der Hin- und Her-Bewegung des Längsschlittens 15 sowie an den Umkehrpunkten der Hin- und Her-Bewegung des Querschlittens 18 das Führungsrad 26 in der jeweiligen Führungsausnehmung 28 nicht mechanisch begrenzt wird. So wird ein abruptes Abbremsen des Bewegungsablaufs sowie andernfalls hohe impulsartige wirkende mechanische Belastungen vermieden und insgesamt einen vibrationsarmen Bewegungsablauf ermöglicht.

Vorteilhafter Weise sind an den Führungsausnehmungen 28 jeweils ein erstes schwenkbares Leitelement 30 sowie ein zweites schwenkbares Leitelement 31 angeordnet. Das erste Leitelement 30 ist anfangspositionsseitig im Bereich des Übergangs 32 von der Rücklaufführungsbahn 25 zu der Arbeitstaktführungsbahn 24 angeordnet. Das zweite Leitelement 31 ist endpositionsseitig im Bereich des Übergangs 33 von der Arbeitstaktführungsbahn 24 zu der Rücklaufführungsbahn 25 angeordnet. Anders ausgedrückt sind die Leitelemente 30, 31 jeweils bahnendseitig angeordnet.

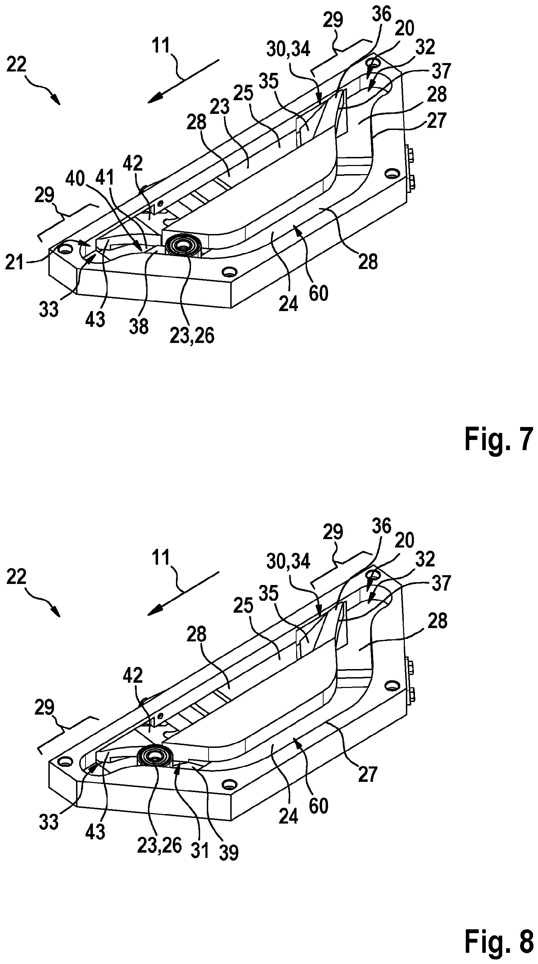

Die ersten und zweiten Leitelemente 30, 31 sind jeweils aus der Bahnebene der Führungsausnehmungen 28 heraus- und in diese hineinschwenkbar angeordnet. Die Leitelemente 30, 31 sind also derart angeordnet, dass diese in die Führungsausnehmung 28 hineinragen und zumindest sich - im eingeschwenkten Zustand - zumindest über einen Teil der Höhe der Führungsausnehmungen 28 erstrecken, beispielsweise, wie in den Fig. 9, 10 und 12 gezeigt. Wie in den Fig. 7, 8 und 11 gezeigt, können - wie nachstehend im Detail beschrieben - die Leitelemente 30, 31 aus der genannten Bahnebene herausgeschwenkt werden, so dass die Führungsausnehmung 28 an der jeweiligen Leitelementposition für die Passage des Führungselements 23 bzw. des Führungsrades 26 frei wird. Die ersten und zweiten Leitelemente 30, 31 bilden auf diese Weise jeweils ein Weichenelement, das eingerichtet ist, einen zuverlässigen Übergang des Führungselements 23 von der Rücklaufführungsbahn 25 in die Arbeitstaktführungsbahn 24 und umgekehrt zu gewährleisten.

Vorteilhafter Weise umfasst das erste Leitelement 30 ein Rücklaufführungsbahn-Sperrelement das ausgebildet und eingerichtet ist, das Führungselement 23 bzw. das Führungsrad 26 während des Rücklauftaktes durch Schwenken aus der Bahnebene der Rücklaufführungsbahn 25 heraus passieren zu lassen. Dieser Vorgang ist in Fig. 11 gezeigt. Nach dem Passieren des Führungselements 23 wird durch Hineinschwenken zumindest des Rücklaufführungsbahn-Sperrelements 34 in die Bahnebene der Führungsausnehmung 28 der Rücklaufführungsbahn 25 die Rücklaufführungsbahn 25 für eine Passage des Führungselements 23 während des Arbeitstakts gesperrt. Dies ist in Fig. 12 veranschaulicht. Das Führungselement 23 hat das Rücklaufführungsbahn-Sperrelement 34 bereits passiert, wobei das Rücklaufführungsbahn-Sperrelement 34 während des Passierens des Führungselements 23 aus der Bahnebene herausgeschwenkt worden ist. Nach erfolgtem Rückschwenken in die Bahnebene verhindert das Rücklaufführungsbahn-Sperrelement 34, ein Einlaufen des Führungselements 23 und leitet dieses in die Arbeitstaktführungsbahn 24, so dass dieses - wie in Fig. 6 gezeigt - in der Arbeitstaktführungsbahn 24 geführt wird.

Vorzugsweise umfasst das Rücklaufführungsbahn-Sperrelement 34 ein erstes Führungselement-Tastteil 35 und ein Arbeitstaktführungsbahn-Teil 36. Das erste Führungselement-Tastteil 35 ist vorzugsweise rampenförmig mit entgegen der Förderrichtung 11 zunehmender Breite ausgebildet. Die Breite des Führungselement-Tastteils 35 streckt sich in Höhenrichtung der Führungsausnehmung 28. Das Arbeitstaktführungsbahn-Teil 36 ist derart eingerichtet, dass dieses mindestens einen ersten Wandabschnitt 37 der Arbeitstaktführungsbahn 24 bildet. Die Funktionsweise des Führungselement-Tastteils 35 sowie des Arbeitstaktführungsbahn-Teils 36 mit seinem ersten Wandabschnitt 37 geht insbesondere aus den Fig. 11 und 12 hervor. Fig. 11 zeigt die Passage des Führungsrades 26, in dem dieses über das rampenförmige Führungselement-Tastteil 35 hinweggleitet, wobei dieses - in der Zeichnung nach unten - aus der Bahnebene herausgeschwenkt wird. Anschließend stellt sich das erste Leitelement 30 selbsttätig in die Ausgangsposition zurück. Dieser Zustand ist in Fig. 12 gezeigt. Der erste Wandabschnitt 37 bildet nun ein Teil der Arbeitstaktführungsbahn 24.

Weiter bevorzugt umfasst das zweite Leitelement 31 ein Arbeitstaktführungsbahn-Sperrelement 38, das ausgebildet und eingerichtet ist, das Führungselement 23 während des Arbeitstakts durch Schwenken aus der Bahnebene der Arbeitstaktführungsbahn 24 heraus passieren zu lassen, wie dies beispielhaft in den Fig. 7 und 8 gezeigt ist. Nach dem Passieren des Führungselements 23 schwenkt das Arbeitstaktführungsbahn-Sperrelement 38 in die Bahnebene der Führungsausnehmung 28 der Arbeitstaktführungsbahn 24 hinein, so dass die Arbeitstaktführungsbahn 24 für eine Passage des Führungselements 23 während des Rücklauftaktes gesperrt ist, wie dies beispielhaft in der Fig. 9 gezeigt ist.

Das Arbeitstaktführungsbahn-Sperrelement 38 umfasst ein zweites Führungselement-Tastteil 39 und ein Rücklaufführungsbahn-Teil 40. Das zweite Führungselement-Tastteil 39 ist vorzugsweise rampenförmig mit in Förderrichtung 11 zunehmender Breite bezüglich seiner Höhe in der Führungsausnehmung 28 ausgebildet, während das Rücklaufführungsbahn-Teil 40 mindestens einen zweiten Wandabschnitt 41 der Rücklaufführungsbahn 25 bildet.

Die prinzipielle Funktionsweise ist in den Fig. 6 bis 9 gezeigt. Das Führungsrad 26 wird in der Arbeitstaktführungsbahn 24 geführt (Fig. 6). In den Fig. 7 und 8 ist beispielhaft gezeigt, wie das Führungsrad 26 mit dem Führungselement-Tastteil 39 in Kontakt kommt und über dieses hinweggeleitet, während dieses aus der Bahnebene heraus - in der Zeichnung nach unten - herausschwenkt. Die Passage für das Führungsrad 26 ist so frei. Nach dem Passieren des Führungselement-Tastteils 39 schwenkt dieses in die Bahnebene zurück, wie beispielhaft in Fig. 9 gezeigt. Der Rücklaufführungsbahn-Teil 40 bildet nun mit seinem zweiten Wandabschnitt 41 eine Barriere, die ein Einlaufen des Führungselement 23 bzw. des Führungsrades 26 in die Arbeitstaktführungsbahn 24 entgegen der Förderrichtung 11 zuverlässig verhindert und dieses in die Rücklaufführungsbahn 25 leitet.

In den Fig. 6 bis 12 ist eine weitere vorteilhafte Ausbildung der Erfindung gezeigt. In der Rücklaufführungsbahn 25 ist optional ein weiteres, drittes Leitelement 42 gezeigt. Dieses Leitelement 42 ist ebenfalls aus der Bahnebene schwenkbar eingerichtet. Im Gegensatz zu den ersten und zweiten Leitelementen 30, 31 ist dieses jedoch mit dem zweiten Leitelement 31 mechanisch derart gekoppelt, dass beim Herausschwenken des zweiten Leitelements 31 aus der Bahnebene das dritte Leitelement 33 in die Bahnebene hereingeschwenkt wird. In diesem hereingeschwenkten Zustand, wie beispielhaft in Fig. 7 und 8 gezeigt, bildet das Leitelement 33 einen dritten Wandabschnitt 43 der Arbeitstaktführungsbahn 24.

Nach dem Passieren des Führungselements 23 bzw. des Führungsrads 26 und Rückschwenken des zweiten Leitelements 31 in die Bahnebene hinein, wird durch die mechanische Kopplung zugleich das dritte Leitelement 42 - wie in Fig. 9 beispielhaft gezeigt - aus der Bahnebene der Rücklaufführungsbahn 25 herausgeschwenkt, so dass die Führungsausnehmung 28 zur Passage des Führungselements 23 bzw. des Führungsrades 26 frei wird.

Vorzugsweise sind das erste Leitelement 30 und das zweite Leitelement 31 derart ausgebildet, dass diese selbsttätig in die Bahnebene zurückschwenken. Gemäß der bevorzugten Ausbildung mit dem dritten Leitelement 42 wirkt sich dies ebenfalls auf die mechanische Kopplung des zweiten Leitelements 31 mit dem dritten Leitelement 42 aus. In diesem Fall ist das zweite Leitelement 31 so eingerichtet, dass dieses selbsttätig in die Bahnebene zurückschwenkt, während das dritte Leitelement 42 aus dieser herausschwenkt.

Gemäß einer bevorzugten Ausführung der Erfindung sind an dem ersten Leitelement 30, dem zweiten Leitelement 31 und/oder dem dritten Leitelement 42 - in der Zeichnung nicht gezeigte - Rückstellmittel angeordnet, die eingerichtet sind, diese selbsttätig in die Bahnebene zurückzuschwenken. Als Rückstellmittel kommen beispielsweise Zug- oder Druckfedern oder pneumatische Zylinder zum Einsatz.

Vorzugsweise umfasst die Fördereinrichtung 10 eine - in der Zeichnung nicht gezeigte - Förderkette, an der die Aufnahmeelemente 19 angeordnet sind. Die Fördereinrichtung 10 umfasst weiter einen - in der Zeichnung nicht gezeigten - Antrieb, der zum Antreiben der Förderkette eingerichtet ist. Dieser Antrieb umfasst mindestens einen endlos umlaufenden Riemen- oder Kettentrieb, mit dem der Längsschlitten 15 mittels einer Koppelstange gekoppelt ist. Hierdurch wird einerseits eine starre Synchronisation der Bewegung der Längsschlittenbewegung erreicht und zugleich die oszillierende Hin- und Herbewegung des Längsschlittens 15 in und entgegen der Förderrichtung 11 bewirkt.

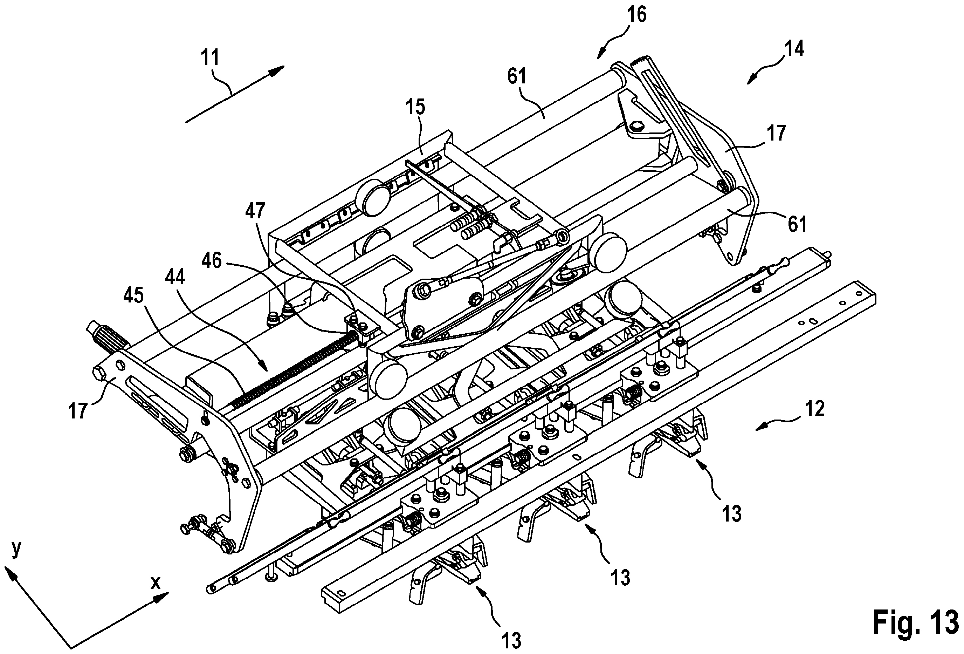

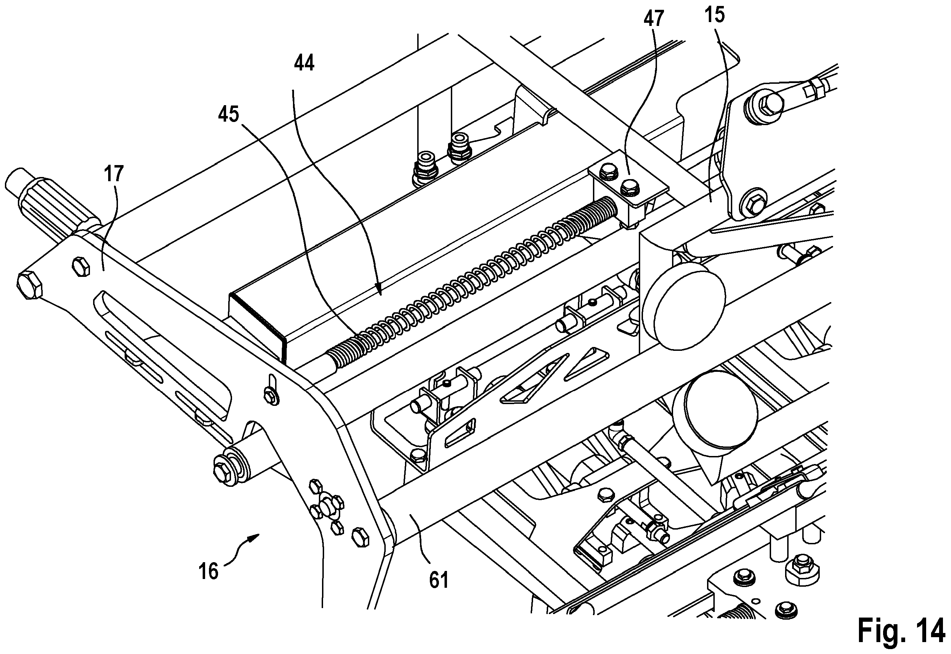

Wie in Fig. 13 gezeigt umfasst die Positioniereinheit 14 eine Längsschlitten-Federeinheit 44. Die Längsschlitten-Federeinheit 44 ist ausgebildet, beim Erreichen einer vorgegebenen Rücklaufposition des Längsschlittens 15 während eines Rücklauftakts zwischen dem Längsschlitten 15 und dem Trägerelement 16 federvorgespannt zu werden. Fig. 13 zeigt beispielhaft, wie die Längsschlitten-Federeinheit 44 bereits teilweise vorgespannt ist. Besonders bevorzugt befindet sich die vorgegebene Rücklaufposition bei ca. 1/3 der gesamten Rücklaufwegstecke. Auf diesem ersten Drittel der Wegstrecke ist die Längsschlitten-Federeinheit 44 nicht im Eingriff mit dem Längsschlitten 15. Danach wird die Längsschlitten-Federeinheit 44 gleitend federvorgespannt. Eine vergrößerte Detailansicht der in Fig. 13 gezeigten Längsschlitten-Federeinheit 44 ist in Fig. 14 gezeigt.

Wie beispielhaft in Fig. 13 gezeigt, umfasst die Längsschlitten-Federeinheit 44 mindestens ein Längs-Federelement 45. Das Längs-Federelement 45 ist wahlweise - in der Zeichnung nicht gezeigt - einseitig an dem Trägerelement 16 angeordnet. Eine freie Längs-Federelement-Seite 46 ist eingerichtet, mit einem an dem Längsschlitten 15 angeordneten Längs-Gegenlageelement 47 beim Erreichen der vorgegebenen Rücklaufposition in mechanischen Anlagekontakt zu gelangen.

Optional umfasst die Längsschlitten-Federeinheit 44 - wie in Fig. 13 gezeigt - mindestens das eine Längs-Federelement 45, das einseitig an dem Längsschlitten 15 angeordnet ist und dessen freie Längs-Federelement-Seite 46 eingerichtet ist, mit dem an dem Trägerelement 16 angeordneten Längs-Gegenlageelement 47 beim Erreichen der vorgegebenen Rücklaufposition in mechanischen Anlagekontakt zu gelangen. Wie in der Zeichnung gezeigt ist das mindestens eine Längs-Federelement 45 als Druckfeder ausgebildet. Alternativ ist das Längs-Federelement 45 als Zugfeder ausgebildet.

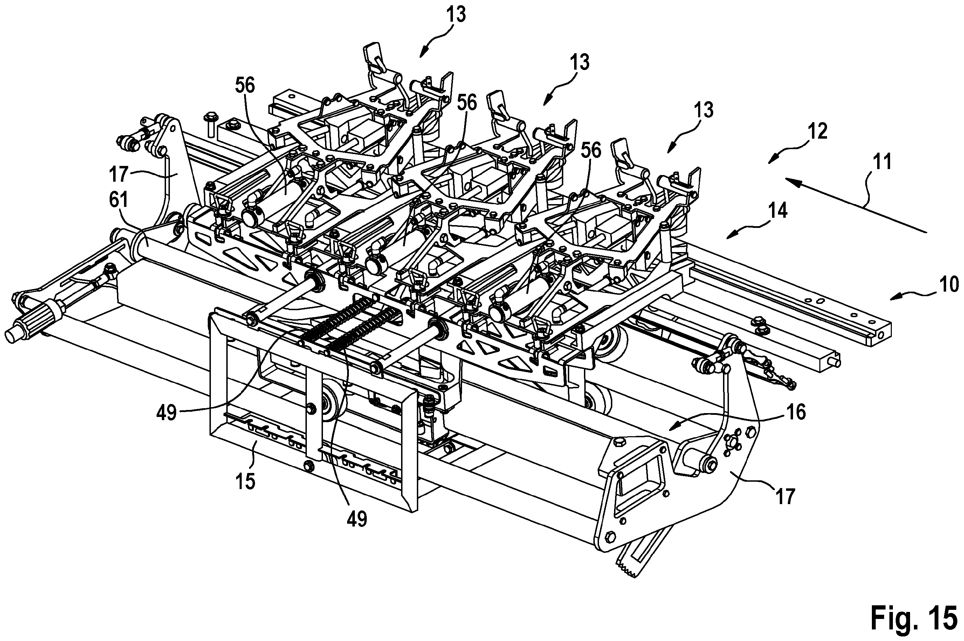

Fig. 15 zeigt die Positioniereinheit 14, die eine Querschlitten-Federeinheit 48 umfasst. Diese ist ausgebildet und eingerichtet, beim Erreichen einer vorgegebenen Auslenkposition des Querschlittens 18 während eines Arbeitstakts zwischen dem Querschlitten 18 und dem Längsschlitten 15 federvorgespannt zu werden.

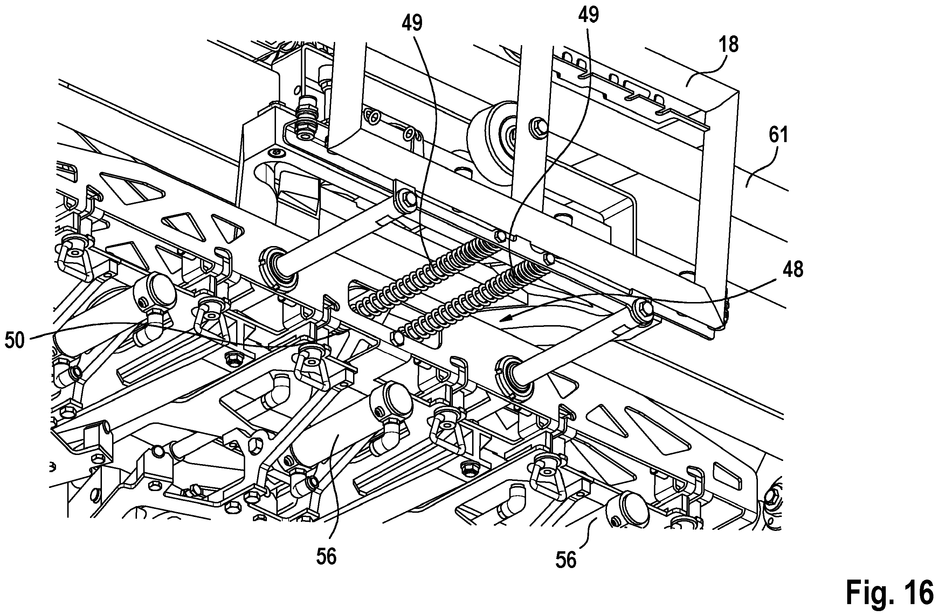

Fig. 16 zeigt eine vergrößerte Detailansicht der in Fig. 15 gezeigten Querschlitten-Federeinheit 48. Vorzugsweise umfasst die Querschlitten-Federeinheit 48 mindestens ein Quer-Federelement 49, insbesondere zwei der Quer-Federelemente 49. Das mindestens eine Quer-Federelement 49 ist einseitig an dem Längsschlitten 15 angeordnet. Dessen eine freie Quer-Federelement-Seite 50 ist eingerichtet, mit einem an dem Querschlitten 18 angeordneten - in der Zeichnung nicht sichtbaren - Quer-Gegenlageelement beim Erreichen der vorgegebenen Auslenkposition in mechanischen Anlagekontakt zu gelangen. Die Funktionsweise der Querschlitten-Federeinheit 48 ist gleich derjenigen der Längsschlitten-Federeinheit 44. Die dort genannten Vorteile und Funktionsweisen gelten auch für die erfindungsgemäße Querschlitten-Federeinheit 48. Vorzugsweise ist der Querschlitten 18 gegenüber der Horizontalen derart geneigt angeordnet, dass eine Bewegung des Querschlittens 18 zu den Bearbeitungswerkzeugen 13 hin schwerkraftunterstützt eingerichtet ist. Anders ausgedrückt ist der Querschlitten 18 zu den Bearbeitungswerkzeugen 13 hin nach unten geneigt angeordnet.

Alternativ ist das mindestens eine Quer-Federelement 49 einseitig an dem Querschlitten 18 angeordnet. Dessen eine freie Quer-Federelement-Seite ist eingerichtet, mit dem an dem Längsschlitten 15 angeordneten Quer-Gegenlageelement beim Erreichen der vorgegebenen Auslenkposition in mechanischen Anlagekontakt zu gelangen. Vorzugsweise sind die Quer-Federelement(e) 49 - wie in der Zeichnung gezeigt - als Druckfeder(n) ausgebildet. Es ist jedoch auch möglich, diese als Zugfedern auszuführen. Die Anlenkung des Quer-Federelements 49 ist dann entsprechend anzupassen.

Vorzugsweise ist das Trägerelement 16 quer zu der Förderrichtung 11 positionsverstellbar eingerichtet. Auf diese Weise kann die Null-Lage der Bearbeitungswerkzeuge 13 bezüglich der Aufnahmeelemente 19 optimal justiert werden. Das Trägerelement 16 weist dazu beispielsweise - in der Zeichnung nicht gezeigte - Gewindebohrungen auf, durch die ortsfest angeordnete Gewindestangen geführt sind. Die Positionsverstellung erfolgt durch Verdrehen der Gewindestangen.

Die vorliegende Erfindung ist insbesondere für das Entfernen des Gabelbeins von Geflügelschlachtkörpern geeignet. Die vorliegende Erfindung umfasst daher auch eine Anordnung zum Entfernen des Gabelbeins von Geflügelschlachtkörpern. Diese Anordnung umfasst die zuvor beschriebene erfindungsgemäße Vorrichtung, wobei die Artikel Geflügelschlachtkörper sind, die Aufnahmeelemente 19 zum Halten jeweils eines der Geflügelschlachtkörper mit seiner Halsseite zu der Bearbeitungsstation 12 weisend eingerichtet sind, und das mindestens eine Bearbeitungswerkzeug 13 als eine Gabelbeinentfernungseinheit 51 ausgebildet ist.

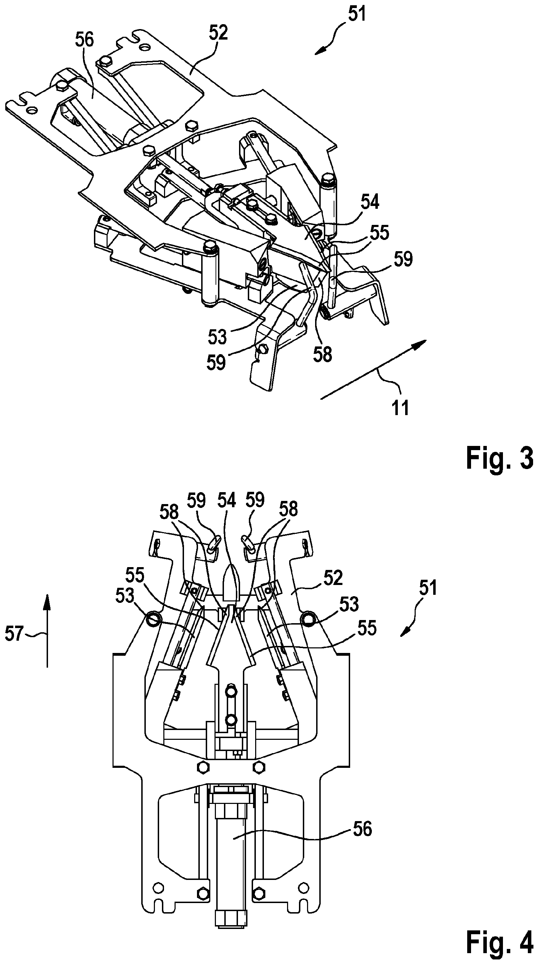

Fig 3. zeigt eine perspektivische Ansicht einer solchen Gabelbeinentfernungseinheit 51. An einem Tragrahmen 52 sind zwei äußere Trennelemente 53 sowie ein dazwischenliegendes Doppeltrennelement 54 mit zwei Schneidkanten 55 schiebebeweglich angeordnet.

Fig. 4 zeigt die Trennelemente 53 sowie das Doppeltrennelement 54 in einer Warteposition, bei der diese den größtmöglichen Abstand zu den Aufnahmeelementen 19 und damit zu den - in der Zeichnung nicht gezeigten - zu bearbeiteten Geflügelschlachtkörpern aufweisen.

Zum Lösen und/oder Entfernen des Gabelbeins werden diese, wie in der Fig. 5 gezeigt in einer Trennposition mittels eines Aktors 56 quer zu der Förderrichtung 11, also in Richtung der Aufnahmeelemente 19 verschoben, nämlich in Zustellrichtung 57.

Die Trennelemente 53 sind jeweils gegenüber der Zustellrichtung 57 derart geneigt angeordnet, dass deren freie Enden 58 sich in der Trennposition treffen oder annähernd, insbesondere unter einem spitzen Winkel. Das Doppeltrennelement 54 ist pfeilförmig ausgebildet und dessen Trennelemente 53 sind jeweils im Wesentlichen parallel oder parallel zu den Trennelementen 53 ausgerichtet. Optionale Filet-Führungselemente 59 dienen dazu, Fleischbereiche vom Schneidweg fernzuhalten, insbesondere um die Au-βenfilets im Schulterbereich beiseite zu drängen, so dass die Trennelemente 52 das Gabelbein optimal heraustrennen können, ohne mit den genannten Fleischbereichen in Kontakt zu gelangen bzw. zu kollidieren.

Wie eingangs beschrieben ist mindestens eine der zuvor beschriebenen Gabelbeinentfernungseinrichtungen 51 als Bearbeitungswerkzeug 13 Teil der erfindungsgemäßen Positioniereinrichtung 14. Die Positioniereinrichtung 14 ist ausgebildet alle Gabelbeinentfernungseinrichtungen 51 einerseits mit den zu bearbeitenden Geflügelschlachtkörpern in der Förderrichtung 11 mitzuführen und anderseits während des Arbeitstakts quer zu der Förderrichtung 11 in Richtung der Aufnahmeelemente 19 auf die zu bearbeitenden Geflügelschlachtkörper zuzuführen. Mittels einer - in der Zeichnung nicht gezeigten Steuereinrichtung - wird nach Erreichen der maximalen Auslenkung des Querschlittens 18 der Aktor 56 veranlasst, die Trennelemente 53 sowie das Doppeltrennelement 54 aus der in Fig. 3 gezeigten Warteposition in die Trennposition zu verschieben. Die erfindungsgemäße Positioniereinheit 14 ist daher ausgebildet, die mindestens eine Gabelbeinentfernungseinrichtung 51 mittels einer Globalbewegung vorzupositionieren und so möglichst nahe an die zu bearbeitenden Geflügelschlachtkörper heranzuführen. Die Gabelbeinentfernungseinrichtung 51 muss daher nur noch eine vergleichsweise kleine Bewegung durchführen, nämlich die Trennelemente 53 sowie das Doppeltrennelement 54 aus der Warteposition in die Trennposition zu verbringen. Aufgrund der zuvor genannten Vorteile der erfindungsgemäße Positioniereinheit 14 werden die Gabelbeinentfernungseinrichtungen 51 so mit hoher Geschwindigkeit und Präzision vorpositioniert. Die Gabelbeinentfernungseinrichtung 51 führen praktisch selbst keine Zustellbewegung zu den Aufnahmeelementen 19 mehr durch. Vorteilhafter Weise kann so die pro Zeiteinheit bearbeitbare Anzahl von Geflügelschlachtköpern signifikant erhöht werden.

## Patentansprüche

1. Vorrichtung zur mitlaufenden Werkzeugpositionierung linear geförderter Artikel, umfassend
eine eine Förderstrecke bildende Fördereinrichtung (10) zum Fördern der Artikel in eine Förderrichtung (11) mit einer Mehrzahl zum Halten der Artikel eingerichteten Aufnahmeelementen (19),
eine entlang der Förderstrecke angeordnete Bearbeitungsstation (12) mit mindestens einem zum Bearbeiten der Artikel eingerichteten Bearbeitungswerkzeug (13), wobei
die Bearbeitungsstation (12) eine zum Positionieren des mindestens einen Bearbeitungswerkzeugs (13) eingerichtete Positioniereinheit (14) aufweist, wobei
die Positioniereinheit (14) durch einen in Förderrichtung (11) gegenüber einem Trägerelement (16) schiebebeweglichen Längsschlitten (15) sowie einen daran quer zu der Förderrichtung (11) schiebebeweglich angeordneten Querschlitten (18) gebildet ist, wobei
der Längsschlitten (15) oszillierend derart angetrieben ist, dass der Längsschlitten (15) einerseits in einem Arbeitstakt synchron mit den Aufnahmeelementen (19) in der Förderrichtung (11) von einer Anfangsposition (20) in eine Endposition (21) mitläuft und andererseits in einem Rücklauftakt von der Endposition (21) in die Anfangsposition (20) entgegen der Förderrichtung (11) rückläuft, und wobei
der Querschlitten (18) mindestens ein in eine ortsfest angeordnete Kulissenführung (22) eingreifendes Führungselement (23) aufweist, wobei die Kulissenführung (22) zum einen eingerichtet ist, während des Arbeitstakts den Querschlitten (18) quer zu der Förderrichtung (11) aus einer Warteposition zu den Aufnahmeelementen (19) hin in eine Arbeitsposition (60) und aus der Arbeitsposition (60) zurück in die Warteposition zu bewegen, und
zum anderen ausgebildet ist, während des Rücklauftakts den Querschlitten (18) quer zu der Förderrichtung (11) auslenkungsfrei zu führen.

2. Vorrichtung nach Anspruch 1, **dadurch gekennzeichnet, dass** die Kulissenführung (22) mindestens eine Arbeitstaktführungsbahn (24) und eine Rücklaufführungsbahn (25) umfasst, wobei die Rücklaufführungsbahn (25) sich parallel zu der Förderstrecke (11) linear erstreckend ausgebildet ist und sich die Arbeitstaktführungsbahn (24) ausgehend von der Rücklaufführungsbahn (25) jeweils von der Anfangsposition (20) und der Endposition (21) des Längsschlittens (15) zu der Arbeitsposition (60) hin erstreckt.

3. Vorrichtung nach Anspruch 2, **dadurch gekennzeichnet, dass** die Arbeitstaktführungsbahn (24) als eine Kurvenbahn (27) ausgebildet ist.

4. Vorrichtung nach Anspruch 3, **dadurch gekennzeichnet, dass** die Kurvenbahn (27) absatzfrei eingerichtet ist.

5. Vorrichtung nach einem der Ansprüche 1 bis 4 **dadurch gekennzeichnet, dass** das Führungselement (23) als Führungsrad (26) ausgebildet ist.

6. Vorrichtung nach Anspruch 5, **dadurch gekennzeichnet, dass** die Arbeitstaktführungsbahn (24) und die Rücklaufführungsbahn (25) der Kulissenführung (22) jeweils als Führungsausnehmungen (28) eingerichtet sind, in denen das Führungsrad (26) geführt wird.

7. Vorrichtung nach Anspruch 6, **dadurch gekennzeichnet, dass** die Führungsausnehmungen (28) an den jeweiligen Übergangsbereichen (29) zwischen der Arbeitstaktführungsbahn (24) und der Rücklaufführungsbahn (25) ein vorbestimmtes Übermaß gegenüber dem Führungsrad (26) aufweisen.

8. Vorrichtung nach Anspruch 6 oder 7, **dadurch gekennzeichnet, dass** in der Führungsausnehmung (28) schwenkbare Leitelemente (30, 31) angeordnet sind, nämlich ein erstes Leitelement (30) anfangspositionsseitig im Bereich des Übergangs (32) von der Rücklaufführungsbahn (25) zu der Arbeitstaktführungsbahn (24) sowie ein zweites Leitelement (31) endpositionsseitig im Bereich des Übergangs (33) von der Arbeitstaktführungsbahn (24) zu der Rücklaufführungsbahn (25).

9. Vorrichtung nach Anspruch 8, **dadurch gekennzeichnet, dass** die ersten und zweiten Leitelemente (30, 31) jeweils aus der Bahnebene der Führungsausnehmungen (28) heraus- und in diese hineinschwenkbar angeordnet sind.

10. Vorrichtung nach Anspruch 9, **dadurch gekennzeichnet, dass** das erste Leitelement (30) ein Rücklaufführungsbahn-Sperrelement (34) umfasst, das ausgebildet und eingerichtet ist, das Führungselement (23) während des Rücklauftaktes durch Schwenken aus der Bahnebene der Rücklaufführungsbahn (25) heraus passieren zu lassen, und nach dem Passieren des Führungselements (23) durch Hineinschwenken zumindest des Rücklaufführungsbahn-Sperrelements (34) in die Bahnebene der Führungsausnehmung (28) der Rücklaufführungsbahn (25) die Rücklaufführungsbahn (25) für eine Passage des Führungselements (23) während des Arbeitstakts zu sperren.

11. Vorrichtung nach Anspruch 10, **dadurch gekennzeichnet, dass** das Rücklaufführungsbahn-Sperrelement (34) ein erstes Führungselement-Tastteil (35) und ein Arbeitstaktführungsbahn-Teil (36) umfasst, wobei das erste Führungselement-Tastteil (35) rampenförmig mit entgegen der Förderrichtung (11) zunehmender Breite ausgebildet ist, und wobei das Arbeitstaktführungsbahn-Teil (36) mindestens einen ersten Wandabschnitt (37) der Arbeitstaktführungsbahn (24) bildet.

12. Vorrichtung nach einem der Ansprüche 9 bis 11, **dadurch gekennzeichnet, dass** das zweite Leitelement (31) ein Arbeitstaktführungsbahn-Sperrelement (38) umfasst, das ausgebildet und eingerichtet ist, das Führungselement (23) während des Arbeitstakts durch Schwenken aus der Bahnebene der Arbeitstaktführungsbahn (24) heraus passieren zu lassen, und nach dem Passieren des Führungselements (23) durch Hineinschwenken zumindest des Arbeitstaktführungsbahn-Sperrelements (38) in die Bahnebene der Führungsausnehmung (28) der Arbeitstaktführungsbahn (24) die Arbeitstaktführungsbahn (24) für eine Passage des Führungselements (23) während des Rücklauftaktes zu sperren.

13. Vorrichtung nach Anspruch 12, **dadurch gekennzeichnet, dass** das Arbeitstaktführungsbahn-Sperrelement (38) ein zweites Führungselement-Tastteil (39) und ein Rücklaufführungsbahn-Teil (40) umfasst, wobei das zweite Führungselement-Tastteil (39) rampenförmig mit in Förderrichtung (11) zunehmender Breite ausgebildet ist, und wobei das Rücklaufführungsbahn-Teil (40) mindestens einen zweiten Wandabschnitt (41) der Rücklaufführungsbahn (25) bildet.

14. Vorrichtung nach einem der Ansprüche 9 bis 13, **dadurch gekennzeichnet, dass** das erste Leitelement (30) und das zweite Leitelement (31) derart ausgebildet sind, dass diese selbsttätig in die Bahnebene zurückschwenken.

15. Vorrichtung nach Anspruch 14, **dadurch gekennzeichnet, dass** an dem ersten Leitelement (30) und/oder an dem zweiten Leitelement (31) Rückstellmittel angeordnet sind, die eingerichtet sind, diese selbsttätig in die Bahnebene zurückzuschwenken.

16. Vorrichtung nach einem der Ansprüche 1 bis 15, **dadurch gekennzeichnet, dass** die Fördereinrichtung (10) eine Förderkette, an der die Aufnahmeelemente (19) angeordnet sind, sowie einen Antrieb zum Antreiben der Förderkette umfasst, wobei der Antrieb mindestens einen endlos umlaufenden Riemen- oder Kettentrieb umfasst, mit dem der Längsschlitten (15) mittels einer Koppelstange gekoppelt ist.

17. Vorrichtung nach einem der Ansprüche 1 bis 16, **dadurch gekennzeichnet, dass** die Positioniereinheit (14) eine Längsschlitten-Federeinheit (44) umfasst, die ausgebildet und eingerichtet ist, beim Erreichen einer vorgegebenen Rücklaufposition des Längsschlittens während eines Rücklauftakts zwischen dem Längsschlitten (15) und dem Trägerelement (16) federvorgespannt zu werden.

18. Vorrichtung nach Anspruch 17, **dadurch gekennzeichnet, dass** die Längsschlitten-Federeinheit (44) mindestens ein Längs-Federelement (45) umfasst, das einseitig an dem Trägerelement (16) angeordnet ist und dessen eine freie Längs-Federelement-Seite (46) eingerichtet ist, mit einem an dem Längsschlitten (15) angeordneten Längs-Gegenlageelement (47) beim Erreichen der vorgegebenen Rücklaufposition in mechanischen Anlagekontakt zu gelangen.

19. Vorrichtung nach Anspruch 17, **dadurch gekennzeichnet, dass** die Längsschlitten-Federeinheit (44) mindestens ein Längs-Federelement (45) umfasst, das einseitig an dem Längsschlitten (15) angeordnet ist und dessen eine freie Längs-Federelement-Seite (46) eingerichtet ist, mit einem an dem Trägerelement angeordneten Längs-Gegenlageelement (47) beim Erreichen der vorgegebenen Rücklaufposition in mechanischen Anlagekontakt zu gelangen.

20. Vorrichtung nach Anspruch 18 oder 19, **dadurch gekennzeichnet, dass** das mindestens eine Längs-Federelement (45) als Druckfeder oder als Zugfeder ausgebildet ist.

21. Vorrichtung nach einem der Ansprüche 1 bis 20, **dadurch gekennzeichnet, dass** die Positioniereinheit (14) eine Querschlitten-Federeinheit (48) umfasst, die ausgebildet und eingerichtet ist, beim Erreichen einer vorgegebenen Auslenkposition des Querschlittens (18) während eines Arbeitstakts zwischen dem Querschlitten (18) und dem Längsschlitten (15) federvorgespannt zu werden.

22. Vorrichtung nach Anspruch 21, **dadurch gekennzeichnet, dass** die Querschlitten-Federeinheit (48) mindestens ein Quer-Federelement (49) umfasst, das einseitig an dem Längsschlitten (15) angeordnet ist und dessen eine freie Quer-Federelement-Seite (50) eingerichtet ist, mit einem an dem Querschlitten (18) angeordneten Quer-Gegenlageelement beim Erreichen der vorgegebenen Auslenkposition in mechanischen Anlagekontakt zu gelangen.

23. Vorrichtung nach Anspruch 22, **dadurch gekennzeichnet, dass** die Querschlitten-Federeinheit (48) mindestens ein Quer-Federelement (49) umfasst, das einseitig an dem Querschlitten (18) angeordnet ist und dessen eine freie Quer-Federelement-Seite (50) eingerichtet ist, mit einem an dem Längsschlitten (15) angeordneten Quer-Gegenlageelement beim Erreichen der vorgegebenen Auslenkposition in mechanischen Anlagekontakt zu gelangen.

24. Vorrichtung nach einem der Ansprüche 22 oder 23, **dadurch gekennzeichnet, dass** das mindestens eine Quer-Federelement (49) als Druckfeder oder als Zugfeder ausgebildet ist.

25. Vorrichtung nach einem der Ansprüche 1 bis 24, **dadurch gekennzeichnet, dass** das Trägerelement (16) quer zu der Förderrichtung (11) positionsverstellbar eingerichtet ist.

26. Anordnung zum Entfernen des Gabelbeins von Geflügelschlachtkörpern, umfassend eine Vorrichtung nach einem der Ansprüche 1 bis 25, wobei die Artikel Geflügelschlachtkörper sind, die Aufnahmeelemente (19) zum Halten jeweils eines der Geflügelschlachtkörper mit seiner Halsseite zu der Bearbeitungsstation (12) weisend eingerichtet sind, und das mindestens eine Bearbeitungswerkzeug (13) als eine Gabelbeinentfernungseinheit ausgebildet ist.

27. Verfahren zur mitlaufenden Werkzeugpositionierung linear geförderter Artikel, umfassend die Schritte:
Fördern der Artikel in eine Förderrichtung (11) mit einer Mehrzahl zum Halten der Artikel eingerichteten Aufnahmeelementen (19) entlang einer Förderstrecke, an der eine Bearbeitungsstation (12) mit mindestens einem zum Bearbeiten der Artikel eingerichteten Bearbeitungswerkzeug (13) angeordnet ist, mittels einer die Förderstrecke bildenden Fördereinrichtung (10),
wobei die Bearbeitungsstation (12) eine zum Positionieren des mindestens einen Bearbeitungswerkzeugs (13) eingerichtete Positioniereinheit (14) aufweist, wobei die Positioniereinheit (14) durch einen in Förderrichtung (11) gegenüber einem Trägerelement (16) schiebebeweglichen Längsschlitten (15) sowie einen daran quer zu der Förderrichtung (11) schiebebeweglichen angeordneten Querschlitten (18) gebildet ist,
oszillierendes Antreiben des Längsschlittens (15) derart, dass der Längsschlitten (15) einerseits in einem Arbeitstakt synchron mit den Aufnahmeelementen (19) in der Förderrichtung (11) von einer Anfangsposition (20) in eine Endposition (21) mitläuft und andererseits in einem Rücklauftakt von der Endposition (21) in die Anfangsposition (20) entgegen der Förderrichtung (11) rückläuft, und
Bewegen des Querschlittens (18) während des Arbeitstakts quer zu der Förderrichtung (11) aus einer Warteposition zu den Aufnahmeelementen (19) hin in eine Arbeitsposition (60) und aus der Arbeitsposition (60) zurück in die Warteposition mittels mindestens eines in eine ortsfest angeordnete Kulissenführung (22) eingreifenden Führungselements (23), und
auslenkungsfreies Führen des Querschlittens (18) während des Rücklauftaktes quer zu der Förderrichtung (11) mittels der Kulissenführung (22).

28. Verfahren nach Anspruch 27, **gekennzeichnet durch**
Bewegen des Querschlittens (18) während des Arbeitstaktes mittels mindestens einer Arbeitstaktführungsbahn (24) der Kulissenführung (22) und
Bewegen des Querschlittens (18) während des Rücklaufstaktes mittels einer Rücklaufführungsbahn (25), die sich linear erstreckt und parallel zu der Förderstrecke verläuft.

29. Verfahren nach Anspruch 28, **dadurch gekennzeichnet, dass** das Bewegen des Querschlittens (18) mittels der als Kurvenbahn (27) ausgebildeten Arbeitstaktführungsbahn (24) erfolgt.

30. Verfahren nach einem der Ansprüche 27 bis 29 **dadurch gekennzeichnet, dass** das Führungselement (23) als Führungsrad (26) ausgebildet ist, das rollend entlang der Kulissenführung (22) geführt wird.

31. Verfahren nach Anspruch 30, **dadurch gekennzeichnet, dass** die Arbeitstaktführungsbahn (24) und die Rücklaufführungsbahn (25) der Kulissenführungen (22) Führungsausnehmungen (28) bilden, in denen das Führungsrad (26) geführt wird.

32. Verfahren nach Anspruch 31, **dadurch gekennzeichnet, dass** das Führungsrad (26) an den jeweiligen Übergangsbereichen (29) zwischen der Arbeitstaktführungsbahn (24) und der Rücklaufführungsbahn (25) in den jeweiligen Führungsausnehmungen (28) zumindest im Wesentlichen führungsfrei läuft.

33. Verfahren nach Anspruch 31 oder 32, **gekennzeichnet durch**
Verschwenken von in der Führungsausnehmung (28) schwenkbar angeordneten Leitelementen (30, 31), nämlich einem ersten Leitelement (30), das anfangspositionsseitig im Bereich des Übergangs (32) von der Rücklaufführungsbahn (25) zu der Arbeitstaktführungsbahn (24) angeordnet ist sowie einem zweiten Leitelement (31), das endpositionsseitig im Bereich des Übergangs (32) von der Arbeitstaktführungsbahn (24) zu der Rücklaufführungsbahn (25) angeordnet ist.

34. Verfahren nach Anspruch 33, **gekennzeichnet durch** Schwenken der ersten und der zweiten Leitelemente (30, 31) jeweils aus der Bahnebene der Führungsausnehmungen (28) heraus und in diese hinein.

35. Verfahren nach Anspruch 34, **gekennzeichnet durch**
Schwenken eines Rücklaufführungsbahn-Sperrelements (34) des ersten Leitelements (30) aus der Bahnebene der Führungsausnehmung (28) der Rücklaufführungsbahn (25) heraus während des Rücklauftakts beim Passieren des Führungselements (23), um das Führungselement (23) passieren zu lassen,
Hineinschwenken zumindest des Rücklaufführungsbahn-Sperrelements (34) in die Bahnebene der Führungsausnehmung (28) der Rücklaufführungsbahn (35) nach dem Passieren des Führungselements (23), um die Rücklaufführungsbahn (25) für eine Passage des Führungselements (23) während des Arbeitstakts zu sperren.

36. Verfahren nach Anspruch 35, **dadurch gekennzeichnet, dass** das Schwenken aus der Bahnebene dadurch erfolgt, dass das Führungselement (23) mit einem rampenförmigen, sich in Förderrichtung (11) verbreiternden, ersten Führungselement-Tastteil (35) des Rücklaufführungsbahn-Sperrelementes (34) in Kontakt kommt, so dass dieses aus der Bahnebene herausgeschwenkt wird und
zum Sperren der Rücklaufführungsbahn (25) während des Arbeitstaktes ein Arbeitstaktführungsbahn-Teil (36) des Rücklaufführungsbahn-Sperrelements (34) mindestens einen ersten Wandabschnitt (37) der Arbeitstaktführungsbahn (24) bildet.

37. Verfahren nach einem der Ansprüche 33 bis 36, **gekennzeichnet durch**
Schwenken eines Arbeitstaktführungsbahn-Sperrelements (38) des zweiten Leitelements (31) aus der Bahnebene der Arbeitstaktführungsbahn (24) heraus während des Arbeitstakts beim Passieren des Führungselements (23), um das Führungselement (23) passieren zu lassen,
Hineinschwenken zumindest des Arbeitstaktführungsbahn-Sperrelements (38) in die Bahnebene der Arbeitstaktführungsbahn (24) nach dem Passieren des Führungselements (23), um die Arbeitstaktführungsbahn (24) für eine Passage des Führungselements (23) während des Rücklauftakts zu sperren.

38. Verfahren nach Anspruch 37, **dadurch gekennzeichnet, dass**
das Schwenken aus der Bahnebene heraus dadurch erfolgt, dass das Führungselement (23) mit einem rampenförmigen, sich in Förderrichtung verbreiternden, zweiten Führungselement-Tastteil (39) des Arbeitstaktführungsbahn-Sperrelementes (38) in Kontakt kommt, so dass dieses aus der Bahnebene herausgeschwenkt wird und
zum Sperren der Arbeitstaktführungsbahn (24) während des Rücklauftaktes ein Arbeitstaktführungsbahn-Teil (36) des Arbeitstaktführungsbahn-Sperrelements (38) mindestens einen zweiten Wandabschnitt (41) der Rücklaufführungsbahn (25) bildet.

39. Verfahren nach einem der Ansprüche 34 bis 36, **dadurch gekennzeichnet, dass** das erste Leitelement (30) und das zweite Leitelement (31) selbsttätig in die Bahnebene zurückschwenken.

40. Verfahren nach Anspruch 39, **dadurch gekennzeichnet, dass** das selbsttätige Zurückschwenken durch an dem ersten Leitelement (30) und/oder an dem zweiten Leitelement (31) angeordnete Rückstellmittel bewirkt wird.

41. Verfahren nach einem der Ansprüche 27 bis 40, **dadurch gekennzeichnet, dass** das oszillierende Antreiben des Längsschlittens (15) über eine Koppelstange erfolgt, die mit einem endlos umlaufenden Riemen- oder Kettentrieb gekoppelt ist, der eine Förderkette antreibt, an der die Aufnahmeelemente der Fördereinrichtung (10) angeordnet sind.

42. Verfahren nach einem der Ansprüche 27 bis 41, **gekennzeichnet durch** Federvorspannen einer zwischen dem Längsschlitten (15) und dem Trägerelement (16) wirkenden Längsschlitten-Federeinheit (44), die Teil der Positioniereinheit (14) ist, beim Erreichen einer vorgegebenen Rücklaufposition des Längsschlittens (15) während eines Rücklauftakts.

43. Verfahren nach Anspruch 42, **dadurch gekennzeichnet, dass** das Federvorspannen der Längsschlitten-Federeinheit (44) mittels mindestens eines Längs-Federelements (45) bewirkt wird, das einseitig an dem Trägerelement (16) angeordnet ist und dessen eine freie Längs-Federelement-Seite (46) mit einem an dem Längsschlitten (15) angeordneten Längs-Gegenlageelement (47) beim Erreichen der vorgegebenen Rücklaufposition in mechanischen Anlagekontakt gelangt.

44. Verfahren nach Anspruch 42, **dadurch gekennzeichnet, dass** das Federvorspannen der Längsschlitten-Federeinheit (44) mittels des mindestens einen Längs-Federelements (45) bewirkt wird, das einseitig an dem Längsschlitten (15) angeordnet ist und dessen eine freie Längs-Federelement-Seite (46) mit einem an dem Trägerelement (16) angeordneten Längs-Gegenlageelement (47) beim Erreichen der vorgegebenen Rücklaufposition in mechanischen Anlagekontakt gelangt.

45. Verfahren nach einem der Ansprüche 27 bis 44, **gekennzeichnet durch** Federvorspannen einer zwischen dem Querschlitten (18) und dem Längsschlitten wirkenden Querschlitten-Federeinheit (48) beim Erreichen einer vorgegebenen Auslenkposition des Querschlittens (18).

46. Verfahren nach Anspruch 45, **dadurch gekennzeichnet, dass** das Federvorspannen der Querschlitten-Federeinheit (48) mittels mindestens eines Quer-Federelements (49) bewirkt wird, das einseitig an dem Längsschlitten (15) angeordnet ist und dessen eine freie Quer-Federelement-Seite (50) mit einem an dem Querschlitten (18) angeordneten Quer-Gegenlageelement beim Erreichen der vorgegebenen Auslenkposition in mechanischen Anlagekontakt gelangt.

47. Verfahren nach Anspruch 45, **dadurch gekennzeichnet, dass** das Federvorspannen der Querschlitten-Federeinheit (48) mittels des mindestens einen Quer-Federelements (49) bewirkt wird, das einseitig am dem Querschlitten (18) angeordnet ist und dessen eine freie Quer-Federelement-Seite (50) mit einem an dem Längsschlitten (15) angeordneten Quer-Gegenlageelement beim Erreichen der vorgegebenen Auslenkposition in mechanischen Anlagekontakt gelangt.

48. Verfahren nach einem der Ansprüche 27 bis 47, **dadurch gekennzeichnet, dass** die Position des Trägerelements (16) quer zu der Förderrichtung (11) einstellbar ist.

49. Verfahren zum Entfernen des Gabelbeins von Geflügelschlachtkörpern, **gekennzeichnet durch** Durchführen der Schritte des Verfahrens nach einem der Ansprüche 27 bis 48, wobei die Artikel Geflügelschlachtkörper sind, jeweils einer der Geflügelschlachtkörper mit seiner Halsseite zu der Bearbeitungsstation (12) weisend mittels der Aufnahmeelemente (19) gehalten wird, und mittels des mindestens einen Bearbeitungswerkzeugs (13), das als eine Gabelbeinentfernungseinheit ausgebildet ist, das Gabelbein des Geflügelschlachtkörpers entfernt wird.

## Claims

1. Apparatus for the moving-along tool positioning of linearly conveyed articles, comprising
a conveyor device (10) forming a conveying line for conveying the articles in a conveying direction (11) and having a plurality of receiving elements (19) adapted to hold the articles,
a processing station (12) arranged along the conveying line and having at least one processing tool (13) adapted to process the articles, wherein
the processing station (12) has a positioning unit (14) adapted to position the at least one processing tool (13), wherein
the positioning unit (14) is formed by a longitudinal slide (15), which is slidable in the conveying direction (11) relative to a carrier element (16), and a transverse slide (18), which is arranged on the longitudinal slide so as to be slidable transverse to the conveying direction (11), wherein
the longitudinal slide (15) is driven in an oscillating manner such that the longitudinal slide (15) on the one hand, in a work cycle, moves along synchronously with the receiving elements (19) in the conveying direction (11) from a starting position (20) into an end position (21) and on the other hand, in a return cycle, moves contrary to the conveying direction (11) from the end position (21) back into the starting position (20), and wherein
the transverse slide (18) has at least one guiding element (23) which engages into a stationarily arranged link guide (22), wherein the link guide (22) on the one hand is adapted, during the work cycle, to move the transverse slide (18) transverse to the conveying direction (11) towards the receiving elements (19) from a standby position into a working position (60) and from the working position (60) back into the standby position, and
on the other hand is configured, during the return cycle, to guide the transverse slide (18) transverse to the conveying direction (11) without deflection.

2. Apparatus according to claim 1, **characterised in that** the link guide (22) comprises at least a work cycle guiding path (24) and a return guiding path (25), wherein the return guiding path (25) is configured so as to extend linearly parallel to the conveying line (11) and the work cycle guiding path (24) extends, starting from the return guiding path (25), in each case from the starting position (20) and the end position (21) of the longitudinal slide (15) to the working position (60).

3. Apparatus according to claim 2, **characterised in that** the work cycle guiding path (24) is in the form of a cam track (27).

4. Apparatus according to claim 3, **characterised in that** the cam track (27) is adapted to be free of steps.

5. Apparatus according to any one of claims 1 to 4, **characterised in that** the guiding element (23) is in the form of a guiding wheel (26).

6. Apparatus according to claim 5, **characterised in that** the work cycle guiding path (24) and the return guiding path (25) of the link guide (22) are each in the form of guiding recesses (28) in which the guiding wheel (26) is guided.

7. Apparatus according to claim 6, **characterised in that** the guiding recesses (28) have a predetermined excess relative to the guiding wheel (26) in the respective transition regions (29) between the work cycle guiding path (24) and the return guiding path (25).

8. Apparatus according to claim 6 or 7, **characterised in that** pivotable guide elements (30, 31) are arranged in the guiding recess (28), namely a first guide element (30) on the starting position side in the region of the transition (32) from the return guiding path (25) to the work cycle guiding path (24) and a second guide element (31) on the end position side in the region of the transition (33) from the work cycle guiding path (24) to the return guiding path (25).

9. Apparatus according to claim 8, **characterised in that** the first and second guide elements (30, 31) are each arranged so as to be pivotable out of and into the path plane of the guiding recesses (28).

10. Apparatus according to claim 9, **characterised in that** the first guide element (30) comprises a return guiding path blocking element (34) which is configured and adapted to allow the guiding element (23) to pass during the return cycle by pivoting out of the path plane of the return guiding path (25) and, after the guiding element (23) has passed, to block the return guiding path (25) for passage of the guiding element (23) during the work cycle by pivoting of at least the return guiding path blocking element (34) into the path plane of the guiding recess (28) of the return guiding path (25).

11. Apparatus according to claim 10, **characterised in that** the return guiding path blocking element (34) comprises a first guiding element sensing part (35) and a work cycle guiding path part (36), wherein the first guiding element sensing part (35) is of ramp-like form with a width that increases contrary to the conveying direction (11), and wherein the work cycle guiding path part (36) forms at least a first wall section (37) of the work cycle guiding path (24).

12. Apparatus according to any one of claims 9 to 11, **characterised in that** the second guide element (31) comprises a work cycle guiding path blocking element (38) which is configured and adapted to allow the guiding element (23) to pass during the work cycle by pivoting out of the path plane of the work cycle guiding path (24) and, after the guiding element (23) has passed, to block the work cycle guiding path (24) for passage of the guiding element (23) during the return cycle by pivoting of at least the work cycle guiding path blocking element (38) into the path plane of the guiding recess (28) of the work cycle guiding path (24).

13. Apparatus according to claim 12, **characterised in that** the work cycle guiding path blocking element (38) comprises a second guiding element sensing part (39) and a return guiding path part (40), wherein the second guiding element sensing part (39) is of ramp-like form with a width that increases in the conveying direction (11), and wherein the return guiding path part (40) forms at least a second wall section (41) of the return guiding path (25).

14. Apparatus according to any one of claims 9 to 13, **characterised in that** the first guide element (30) and the second guide element (31) are configured such that they pivot back into the path plane automatically.

15. Apparatus according to claim 14, **characterised in that** there are arranged on the first guide element (30) and/or on the second guide element (31) restoring means which are adapted to pivot those elements back into the path plane automatically.

16. Apparatus according to any one of claims 1 to 15, **characterised in that** the conveyor device (10) comprises a conveyor chain, on which the receiving elements (19) are arranged, and a drive for driving the conveyor chain, wherein the drive comprises at least one continuously revolving belt drive or chain drive with which the longitudinal slide (15) is coupled by means of a coupling rod.

17. Apparatus according to any one of claims 1 to 16, **characterised in that** the positioning unit (14) comprises a longitudinal slide spring unit (44) which is configured and adapted to be spring-pretensioned between the longitudinal slide (15) and the carrier element (16) when a predefined return position of the longitudinal slide is reached during a return cycle.

18. Apparatus according to claim 17, **characterised in that** the longitudinal slide spring unit (44) comprises at least one longitudinal spring element (45) which is arranged on one side on the carrier element (16) and the one free longitudinal spring element side (46) of which is adapted to come into mechanical contact with a longitudinal counter-surface element (47) arranged on the longitudinal slide (15) when the predefined return position is reached.

19. Apparatus according to claim 17, **characterised in that** the longitudinal slide spring unit (44) comprises at least one longitudinal spring element (45) which is arranged on one side on the longitudinal slide (15) and the one free longitudinal spring element side (46) of which is adapted to come into mechanical contact with a longitudinal counter-surface element (47) arranged on the carrier element when the predefined return position is reached.

20. Apparatus according to claim 18 or 19, **characterised in that** the at least one longitudinal spring element (45) is in the form of a compression spring or in the form of a tension spring.

21. Apparatus according to any one of claims 1 to 20, **characterised in that** the positioning unit (14) comprises a transverse slide spring unit (48) which is configured and adapted to be spring-pretensioned between the transverse slide (18) and the longitudinal slide (15) when a predefined deflected position of the transverse slide (18) is reached during a work cycle.

22. Apparatus according to claim 21, **characterised in that** the transverse slide spring unit (48) comprises at least one transverse spring element (49) which is arranged on one side on the longitudinal slide (15) and the one free transverse spring element side (50) of which is adapted to come into mechanical contact with a transverse counter-surface element arranged on the transverse slide (18) when the predefined deflected position is reached.

23. Apparatus according to claim 22, **characterised in that** the transverse slide spring unit (48) comprises at least one transverse spring element (49) which is arranged on one side on the transverse slide (18) and the one free transverse spring element side (50) of which is adapted to come into mechanical contact with a transverse counter-surface element arranged on the longitudinal slide (15) when the predefined deflected position is reached.

24. Apparatus according to either claim 22 or claim 23, **characterised in that** the at least one transverse spring element (49) is in the form of a compression spring or in the form of a tension spring.

25. Apparatus according to any one of claims 1 to 24, **characterised in that** the carrier element (16) is adapted to as to be adjustable in terms of its position transverse to the conveying direction (11).

26. Assembly for removing the wishbone from poultry carcasses, comprising an apparatus according to any one of claims 1 to 25, wherein the articles are poultry carcasses, the receiving elements (19) are adapted to hold in each case one of the poultry carcasses with its neck side facing the processing station (12), and the at least one processing tool (13) is in the form of a wishbone removal unit.

27. Method for the moving-along tool positioning of linearly conveyed articles, comprising the steps:
conveying the articles by means of a plurality of receiving elements (19) adapted to hold the articles in a conveying direction (11) along a conveying line on which there is arranged a processing station (12) having at least one processing tool (13) adapted to process the articles, by means of a conveyor device (10) forming the conveying line,
wherein the processing station (12) has a positioning unit (14) adapted to position the at least one processing tool (13), wherein the positioning unit (14) is formed by a longitudinal slide (15), which is slidable in the conveying direction (11) relative to a carrier element (16), and a transverse slide (18), which is arranged on the longitudinal slide so as to be slidable transverse to the conveying direction (11),
driving the longitudinal slide (15) in an oscillating manner such that the longitudinal slide (15) on the one hand, in a work cycle, moves along synchronously with the receiving elements (19) in the conveying direction (11) from a starting position (20) into an end position (21) and on the other hand, in a return cycle, moves contrary to the conveying direction (11) from the end position (21) back into the starting position (20),
moving the transverse slide (18) during the work cycle transverse to the conveying direction (11) towards the receiving elements (19) from a standby position into a working position (60) and from the working position (60) back into the standby position by means of at least one guiding element (23) which engages into a stationarily arranged link guide (22), and
guiding the transverse slide (18) without deflection during the return cycle transverse to the conveying direction (11) by means of the link guide (22).

28. Method according to claim 27, **characterised by**
moving the transverse slide (18) during the work cycle by means of at least one work cycle guiding path (24) of the link guide (22), and
moving the transverse slide (18) during the return cycle by means of a return guiding path (25) which extends linearly and runs parallel to the conveying line.

29. Method according to claim 28, **characterised in that** movement of the transverse slide (18) takes place by means of the work cycle guiding path (24) in the form of a cam track (27).

30. Method according to any one of claims 27 to 29, **characterised in that** the guiding element (23) is in the form of a guiding wheel (26) which is guided in a rolling manner along the link guide (22).

31. Method according to claim 30, **characterised in that** the work cycle guiding path (24) and the return guiding path (25) of the link guides (22) form guiding recesses (28) in which the guiding wheel (26) is guided.

32. Method according to claim 31, **characterised in that** the guiding wheel (26), in the respective transition regions (29) between the work cycle guiding path (24) and the return guiding path (25), runs in the respective guiding recesses (28) at least substantially without guiding.

33. Method according to claim 31 or 32, **characterised by**
pivoting of guide elements (30, 31) pivotably arranged in the guiding recess (28), namely a first guide element (30), which is arranged on the starting position side in the region of the transition (32) from the return guiding path (25) to the work cycle guiding path (24), and a second guide element (31), which is arranged on the end position side in the region of the transition (32) from the work cycle guiding path (24) to the return guiding path (25).

34. Method according to claim 33, **characterised by** pivoting of the first and second guide elements (30, 31) out of and into the path plane of the guiding recesses (28).

35. Method according to claim 34, **characterised by**
pivoting of a return guiding path blocking element (34) of the first guide element (30) out of the path plane of the guiding recess (28) of the return guiding path (25) during the return cycle as the guiding element (23) passes, in order to allow the guiding element (23) to pass,
pivoting of at least the return guiding path blocking element (34) into the path plane of the guiding recess (28) of the return guiding path (35) after the guiding element (23) has passed, in order to block the return guiding path (25) for passage of the guiding element (23) during the work cycle.

36. Method according to claim 35, **characterised in that** the pivoting out of the path plane takes place **in that** the guiding element (23) comes into contact with a ramp-like first guiding element sensing part (35), which widens in the conveying direction (11), of the return guiding path blocking element (34), so that the return guiding path blocking element is pivoted out of the path plane, and
for blocking the return guiding path (25) during the work cycle, a work cycle guiding path part (36) of the return guiding path blocking element (34) forms at least a first wall section (37) of the work cycle guiding path (24).

37. Method according to any one of claims 33 to 36, **characterised by**
pivoting of a work cycle guiding path blocking element (38) of the second guide element (31) out of the path plane of the work cycle guiding path (24) during the work cycle as the guiding element (23) passes, in order to allow the guiding element (23) to pass,
pivoting of at least the work cycle guiding path blocking element (38) into the path plane of the work cycle guiding path (24) after the guiding element (23) has passed, in order to block the work cycle guiding path (24) for passage of the guiding element (23) during the return cycle.

38. Method according to claim 37, **characterised in that**
the pivoting out of the path plane takes place **in that** the guiding element (23) comes into contact with a ramp-like second guiding element sensing part (39), which widens in the conveying direction, of the work cycle guiding path blocking element (38), so that the work cycle guiding path blocking element is pivoted out of the path plane, and
for blocking the work cycle guiding path (24) during the return cycle, a work cycle guiding path part (36) of the work cycle guiding path blocking element (38) forms at least a second wall section (41) of the return guiding path (25).

39. Method according to any one of claims 34 to 36, **characterised in that** the first guide element (30) and the second guide element (31) pivot back into the path plane automatically.

40. Method according to claim 39, **characterised in that** the automatic pivoting back is effected by restoring means arranged on the first guide element (30) and/or on the second guide element (31).

41. Method according to any one of claims 27 to 40, **characterised in that** the oscillating driving of the longitudinal slide (15) takes place via a coupling rod which is coupled with a continuously circulating belt drive or chain drive which drives a conveyor chain on which the receiving elements of the conveyor device (10) are arranged.

42. Method according to any one of claims 27 to 41, **characterised by** spring-pretensioning of a longitudinal slide spring unit (44), which acts between the longitudinal slide (15) and the carrier element (16) and is part of the positioning unit (14), when a predefined return position of the longitudinal slide (15) is reached during a return cycle.

43. Method according to claim 42, **characterised in that** the spring-pretensioning of the longitudinal slide spring unit (44) is effected by means of at least one longitudinal spring element (45) which is arranged on one side on the carrier element (16) and the one free longitudinal spring element side (46) of which comes into mechanical contact with a longitudinal counter-surface element (47) arranged on the longitudinal slide (15) when the predefined return position is reached.

44. Method according to claim 42, **characterised in that** the spring-pretensioning of the longitudinal slide spring unit (44) is effected by means of the at least one longitudinal spring element (45) which is arranged on one side on the longitudinal slide (15) and the one free longitudinal spring element side (46) of which comes into mechanical contact with a longitudinal counter-surface element (47) arranged on the carrier element (16) when the predefined return position is reached.

45. Method according to any one of claims 27 to 44, **characterised by** spring-pretensioning of a transverse slide spring unit (48), which acts between the transverse slide (18) and the longitudinal slide, when a predefined deflected position of the transverse slide (18) is reached.

46. Method according to claim 45, **characterised in that** the spring-pretensioning of the transverse slide spring unit (48) is effected by means of at least one transverse spring element (49) which is arranged on one side on the longitudinal slide (15) and the one free transverse spring element side (50) of which comes into mechanical contact with a transverse counter-surface element arranged on the transverse slide (18) when the predefined deflected position is reached.

47. Method according to claim 45, **characterised in that** the spring-pretensioning of the transverse slide spring unit (48) is effected by means of the at least one transverse spring element (49) which is arranged on one side on the transverse slide (18) and the one free transverse spring element side (50) of which comes into mechanical contact with a transverse counter-surface element arranged on the longitudinal slide (15) when the predefined deflected position is reached.

48. Method according to any one of claims 27 to 47, **characterised in that** the position of the carrier element (16) is adjustable transverse to the conveying direction (11).

49. Method for removing the wishbone from poultry carcasses, **characterised by** carrying out the steps of the method according to any one of claims 27 to 48, wherein the articles are poultry carcasses, in each case one of the poultry carcasses is held by means of the receiving elements (19) with its neck side facing the processing station (12), and the wishbone of the poultry carcass is removed by means of the at least one processing tool (13), which is in the form of a wishbone removal unit.

## Revendications

1. Dispositif pour le positionnement par outils mobiles d'articles transportés linéairement, comprenant
un appareil de transport (10) formant une voie de transport pour transporter les articles dans une direction de transport (11) avec une pluralité d'éléments de réception (19) adaptés pour maintenir les articles,
un poste de traitement (12) agencé le long de la voie de transport, avec au moins un outil de traitement (13) adapté pour traiter les articles,
le poste de traitement (12) présentant une unité de positionnement (14) adaptée pour positionner l'au moins un outil de traitement (13),
l'unité de positionnement (14) étant formée par un chariot longitudinal (15) mobile en coulissement dans la direction de transport (11) par rapport à un élément de support (16) ainsi que par un chariot transversal (18) agencé sur celui-ci de manière mobile en coulissement transversalement à la direction de transport (11),
le chariot longitudinal (15) étant entraîné de manière oscillante de telle sorte que le chariot longitudinal (15), d'une part, se déplace dans un cycle de travail de manière synchrone avec les éléments de réception (19) dans la direction de transport (11) d'une position initiale (20) à une position finale (21) et, d'autre part, revient dans un cycle de retour de la position finale (21) à la position initiale (20) à l'encontre de la direction de transport (11), et
le chariot transversal (18) présentant au moins un élément de guidage (23) s'engageant dans un guidage à coulisse (22) agencé de manière fixe, le guidage à coulisse (22) étant adapté d'une part pour déplacer le chariot transversal (18) pendant le cycle de travail transversalement à la direction de transport (11) d'une position d'attente vers les éléments de réception (19) dans une position de travail (60) et de la position de travail (60) en retour dans la position d'attente, et
d'autre part, étant configuré pour guider sans déviation le chariot transversal (18) transversalement à la direction de transport (11) pendant le cycle de retour.

2. Dispositif selon la revendication 1, **caractérisé en ce que** le guidage à coulisse (22) comprend au moins une piste de guidage de cycle de travail (24) et une piste de guidage de retour (25), la piste de guidage de retour (25) étant configurée de manière à s'étendre linéairement parallèlement à la voie de transport (11) et la piste de guidage de cycle de travail (24) s'étendant à partir de la piste de guidage de retour (25) respectivement de la position initiale (20) et de la position finale (21) du chariot longitudinal (15) vers la position de travail (60).

3. Dispositif selon la revendication 2, **caractérisé en ce que** la piste de guidage de cycle de travail (24) est configurée sous la forme d'une piste courbe (27).

4. Dispositif selon la revendication 3, **caractérisé en ce que** la piste courbe (27) est adaptée sans décrochement.

5. Dispositif selon l'une quelconque des revendications 1 à 4, **caractérisé en ce que** l'élément de guidage (23) est configuré sous forme de roue de guidage (26).

6. Dispositif selon la revendication 5, **caractérisé en ce que** la piste de guidage de cycle de travail (24) et la piste de guidage de retour (25) du guidage à coulisse (22) sont respectivement adaptées sous forme d'évidements de guidage (28) dans lesquels la roue de guidage (26) est guidée.

7. Dispositif selon la revendication 6, **caractérisé en ce que** les évidements de guidage (28) présentent une surdimension prédéterminée par rapport à la roue de guidage (26) au niveau des zones de transition respectives (29) entre la piste de guidage de cycle de travail (24) et la piste de guidage de retour (25).

8. Dispositif selon la revendication 6 ou 7, **caractérisé en ce que** des éléments conducteurs (30, 31) pivotants sont agencés dans l'évidement de guidage (28), à savoir un premier élément conducteur (30) côté position initiale dans la zone de la transition (32) entre la voie de guidage de retour (25) et la voie de guidage de cycle de travail (24) ainsi qu'un deuxième élément conducteur (31) côté position finale dans la zone de la transition (33) entre la voie de guidage de cycle de travail (24) et la voie de guidage de retour (25).

9. Dispositif selon la revendication 8, **caractérisé en ce que** les premier et deuxième éléments conducteurs (30, 31) sont respectivement agencés de manière à pouvoir pivoter hors du plan de piste des évidements de guidage (28) et dans celui-ci.

10. Dispositif selon la revendication 9, **caractérisé en ce que** le premier élément conducteur (30) comprend un élément de blocage de piste de guidage de retour (34), qui est configuré et adapté pour laisser passer l'élément de guidage (23) pendant le cycle de retour par pivotement hors du plan de piste de la piste de guidage de retour (25), et après le passage de l'élément de guidage (23), par pivotement vers l'intérieur d'au moins l'élément de blocage de piste de guidage de retour (34) dans le plan de piste de l'évidement de guidage (28) de la piste de guidage de retour (25), bloquer la piste de guidage de retour (25) pour un passage de l'élément de guidage (23) pendant le cycle de travail.

11. Dispositif selon la revendication 10, **caractérisé en ce que** l'élément de blocage de piste de guidage de retour (34) comprend une première partie de détection d'élément de guidage (35) et une partie de piste de guidage de cycle de travail (36), la première partie de détection d'élément de guidage (35) étant configurée sous forme de rampe avec une largeur croissante à l'encontre de la direction de transport (11), et la partie de piste de guidage de cycle de travail (36) formant au moins une première section de paroi (37) de la piste de guidage de cycle de travail (24).

12. Dispositif selon l'une quelconque des revendications 9 à 11, **caractérisé en ce que** le deuxième élément conducteur (31) comprend un élément de blocage de piste de guidage de cycle de travail (38) qui est configuré et adapté pour laisser passer l'élément de guidage (23) pendant le cycle de travail par pivotement hors du plan de piste de la piste de guidage de cycle de travail (24), et, après le passage de l'élément de guidage (23), par pivotement vers l'intérieur d'au moins l'élément de blocage de piste de guidage de cycle de travail (38) dans le plan de piste de l'évidement de guidage (28) de la piste de guidage de cycle de travail (24), pour bloquer la piste de guidage de cycle de travail (24) pour un passage de l'élément de guidage (23) pendant le cycle de retour.

13. Dispositif selon la revendication 12, **caractérisé en ce que** l'élément de blocage de piste de guidage de cycle de travail (38) comprend une deuxième partie de détection d'élément de guidage (39) et une partie de piste de guidage de retour (40), la deuxième partie de détection d'élément de guidage (39) étant configurée sous forme de rampe de largeur croissante dans la direction de transport (11), et la partie de piste de guidage de retour (40) formant au moins une deuxième section de paroi (41) de la piste de guidage de retour (25).

14. Dispositif selon l'une quelconque des revendications 9 à 13, **caractérisé en ce que** le premier élément conducteur (30) et le deuxième élément conducteur (31) sont configurés de telle sorte qu'ils pivotent automatiquement en retour dans le plan de piste.

15. Dispositif selon la revendication 14, **caractérisé en ce que** des moyens de rappel sont agencés sur le premier élément conducteur (30) et/ou sur le deuxième élément conducteur (31), qui sont adaptés pour les faire pivoter automatiquement en retour dans le plan de piste.

16. Dispositif selon l'une quelconque des revendications 1 à 15, **caractérisé en ce que** l'appareil de transport (10) comprend une chaîne de transport sur laquelle sont agencés les éléments de réception (19), ainsi qu'un entraînement pour entraîner la chaîne de transport, l'entraînement comprenant au moins une transmission à courroie ou à chaîne sans fin à laquelle le chariot longitudinal (15) est couplé au moyen d'une tige de couplage.

17. Dispositif selon l'une quelconque des revendications 1 à 16, **caractérisé en ce que** l'unité de positionnement (14) comprend une unité de ressort de chariot longitudinal (44), qui est configurée et adaptée pour être précontrainte par ressort entre le chariot longitudinal (15) et l'élément de support (16) lorsqu'une position de retour prédéterminée du chariot longitudinal est atteinte pendant un cycle de retour.

18. Dispositif selon la revendication 17, **caractérisé en ce que** l'unité de ressort de chariot longitudinal (44) comprend au moins un élément de ressort longitudinal (45) qui est agencé d'un côté sur l'élément de support (16) et dont un côté d'élément de ressort longitudinal libre (46) est adapté pour venir en contact d'appui mécanique avec un élément de contre-appui longitudinal (47) agencé sur le chariot longitudinal (15) lorsque la position de retour prédéterminée est atteinte.

19. Dispositif selon la revendication 17, **caractérisé en ce que** l'unité de ressort de chariot longitudinal (44) comprend au moins un élément de ressort longitudinal (45) qui est agencé d'un côté sur le chariot longitudinal (15) et dont un côté d'élément de ressort longitudinal libre (46) est adapté pour venir en contact d'appui mécanique avec un élément de contre-appui longitudinal (47) agencé sur l'élément de support lorsque la position de retour prédéterminée est atteinte.

20. Dispositif selon la revendication 18 ou 19, **caractérisé en ce que** l'au moins un élément de ressort longitudinal (45) est configuré sous forme de ressort de compression ou de ressort de traction.

21. Dispositif selon l'une quelconque des revendications 1 à 20, **caractérisé en ce que** l'unité de positionnement (14) comprend une unité de ressort de chariot transversal (48) qui est configurée et adaptée pour être précontrainte par ressort entre le chariot transversal (18) et le chariot longitudinal (15) lorsqu'une position de déviation prédéterminée du chariot transversal (18) est atteinte pendant un cycle de travail.

22. Dispositif selon la revendication 21, **caractérisé en ce que** l'unité de ressort de chariot transversal (48) comprend au moins un élément de ressort transversal (49) qui est agencé d'un côté sur le chariot longitudinal (15) et dont un côté d'élément de ressort transversal libre (50) est adapté pour venir en contact d'appui mécanique avec un élément de contre-appui transversal agencé sur le chariot transversal (18) lorsque la position de déviation prédéterminée est atteinte.

23. Dispositif selon la revendication 22, **caractérisé en ce que** l'unité de ressort de chariot transversal (48) comprend au moins un élément de ressort transversal (49) qui est agencé d'un côté sur le chariot transversal (18) et dont un côté d'élément de ressort transversal libre (50) est adapté pour venir en contact d'appui mécanique avec un élément de contre-appui transversal agencé sur le chariot longitudinal (15) lorsque la position de déviation prédéterminée est atteinte.

24. Dispositif selon l'une quelconque des revendications 22 ou 23, **caractérisé en ce que** l'au moins un élément de ressort transversal (49) est configuré sous forme de ressort de compression ou de ressort de traction.

25. Dispositif selon l'une quelconque des revendications 1 à 24, **caractérisé en ce que** l'élément de support (16) est adapté de manière à être réglable en position transversalement à la direction de transport (11).

26. Agencement pour enlever la fourchette de carcasses de volailles, comprenant un dispositif selon l'une quelconque des revendications 1 à 25, les articles étant des carcasses de volailles, les éléments de réception (19) étant adaptés pour maintenir respectivement l'une des carcasses de volailles avec son côté cou orienté vers le poste de traitement (12), et l'au moins un outil de traitement (13) étant configuré sous la forme d'une unité d'enlèvement de fourchette.

27. Procédé de positionnement par outils mobiles d'articles transportés linéairement, comprenant les étapes suivantes :
le transport des articles dans une direction de transport (11) avec une pluralité d'éléments de réception (19) adaptés pour maintenir les articles le long d'une voie de transport sur laquelle est agencé un poste de traitement (12) avec au moins un outil de traitement (13) adapté pour traiter les articles, au moyen d'un appareil de transport (10) formant la voie de transport,
le poste de traitement (12) présentant une unité de positionnement (14) adaptée pour positionner l'au moins un outil de traitement (13), l'unité de positionnement (14) étant formée par un chariot longitudinal (15) mobile en coulissement dans la direction de transport (11) par rapport à un élément de support (16) ainsi que par un chariot transversal (18) agencé sur celui-ci de manière mobile en coulissement transversalement à la direction de transport (11),
l'entraînement oscillant du chariot longitudinal (15) de telle sorte que le chariot longitudinal (15), d'une part, se déplace dans un cycle de travail de manière synchrone avec les éléments de réception (19) dans la direction de transport (11) d'une position initiale (20) à une position finale (21) et, d'autre part, revient dans un cycle de retour de la position finale (21) à la position initiale (20) à l'encontre de la direction de transport (11), et
le déplacement du chariot transversal (18) pendant le cycle de travail transversalement à la direction de transport (11) d'une position d'attente vers les éléments de réception (19) dans une position de travail (60) et de la position de travail (60) en retour dans la position d'attente au moyen d'au moins un élément de guidage (23) s'engageant dans un guidage à coulisse (22) agencé de manière fixe, et le guidage sans déviation du chariot transversal (18) pendant le cycle de retour transversalement à la direction de transport (11) au moyen du guidage à coulisse (22).

28. Procédé selon la revendication 27, **caractérisé par**
le déplacement du chariot transversal (18) pendant le cycle de travail au moyen d'au moins une piste de guidage de cycle de travail (24) du guidage à coulisse (22), et
le déplacement du chariot transversal (18) pendant le cycle de retour au moyen d'une piste de guidage de retour (25) qui s'étend linéairement et qui est parallèle à la voie de transport.

29. Procédé selon la revendication 28, **caractérisé en ce que** le déplacement du chariot transversal (18) s'effectue au moyen de la piste de guidage de cycle de travail (24) configurée sous forme de voie courbe (27).

30. Procédé selon l'une quelconque des revendications 27 à 29, **caractérisé en ce que** l'élément de guidage (23) est configuré sous forme de roue de guidage (26) qui est guidée en roulant le long du guidage à coulisse (22).

31. Procédé selon la revendication 30, **caractérisé en ce que** la piste de guidage de cycle de travail (24) et la piste de guidage de retour (25) des guidages à coulisse (22) forment des évidements de guidage (28) dans lesquels la roue de guidage (26) est guidée.

32. Procédé selon la revendication 31, **caractérisé en ce que** la roue de guidage (26) se déplace au moins essentiellement sans guidage dans les évidements de guidage (28) respectifs au niveau des zones de transition (29) respectives entre la piste de guidage de cycle de travail (24) et la piste de guidage de retour (25).

33. Procédé selon la revendication 31 ou 32, **caractérisé par**
le pivotement d'éléments conducteurs (30, 31) agencés de manière pivotante dans l'évidement de guidage (28), à savoir un premier élément conducteur (30) qui est agencé côté position initiale dans la zone de la transition (32) entre la voie de guidage de retour (25) et la voie de guidage de cycle de travail (24) ainsi qu'un deuxième élément conducteur (31) qui est agencé côté position finale dans la zone de la transition (32) entre la voie de guidage de cycle de travail (24) et la voie de guidage de retour (25).

34. Procédé selon la revendication 33, **caractérisé par** le pivotement du premier et du deuxième élément conducteur (30, 31) respectivement hors du plan de piste des évidements de guidage (28) et dans celui-ci.

35. Procédé selon la revendication 34, **caractérisé par**
le pivotement d'un élément de blocage de piste de guidage de retour (34) du premier élément conducteur (30) hors du plan de piste de l'évidement de guidage (28) de la piste de guidage de retour (25) pendant le cycle de retour lors du passage de l'élément de guidage (23) afin de laisser passer l'élément de guidage (23),
le pivotement vers l'intérieur d'au moins l'élément de blocage de piste de guidage de retour (34) dans le plan de piste de l'évidement de guidage (28) de la piste de guidage de retour (35) après le passage de l'élément de guidage (23) afin de bloquer la piste de guidage de retour (25) pour un passage de l'élément de guidage (23) pendant le cycle de travail.

36. Procédé selon la revendication 35, **caractérisé en ce que** le pivotement hors du plan de piste est effectué en mettant l'élément de guidage (23) en contact avec une première partie de détection d'élément de guidage (35) sous forme de rampe, s'élargissant dans la direction de transport (11), de l'élément de blocage de piste de guidage de retour (34), de telle sorte que celui-ci est pivoté hors du plan de piste, et
pour bloquer la piste de guidage de retour (25) pendant le cycle de travail, une partie de piste de guidage de cycle de travail (36) de l'élément de blocage de piste de guidage de retour (34) forme au moins une première section de paroi (37) de la piste de guidage de cycle de travail (24).

37. Procédé selon l'une quelconque des revendications 33 à 36, **caractérisé par**
le pivotement d'un élément de blocage de piste de guidage de cycle de travail (38) du deuxième élément conducteur (31) hors du plan de piste de la piste de guidage de cycle de travail (24) pendant le cycle de travail lors du passage de l'élément de guidage (23) afin de laisser passer l'élément de guidage (23),
le pivotement vers l'intérieur d'au moins l'élément de blocage de piste de guidage de cycle de travail (38) dans le plan de piste de la piste de guidage de cycle de travail (24) après le passage de l'élément de guidage (23) afin de bloquer la piste de guidage de cycle de travail (24) pour un passage de l'élément de guidage (23) pendant le cycle de retour.

38. Procédé selon la revendication 37, **caractérisé en ce que**
le pivotement hors du plan de piste est effectué en mettant l'élément de guidage (23) en contact avec une deuxième partie de détection d'élément de guidage (39) sous forme de rampe, s'élargissant dans la direction de transport, de l'élément de blocage de piste de guidage de cycle de travail (38), de telle sorte que celui-ci est pivoté hors du plan de piste, et
pour bloquer la piste de guidage de cycle de travail (24) pendant le cycle de retour, une partie de piste de guidage de cycle de travail (36) de l'élément de blocage de piste de guidage de cycle de travail (38) forme au moins une deuxième section de paroi (41) de la piste de guidage de retour (25).

39. Procédé selon l'une quelconque des revendications 34 à 36, **caractérisé en ce que** le premier élément conducteur (30) et le deuxième élément conducteur (31) pivotent automatiquement en retour dans le plan de piste.

40. Procédé selon la revendication 39, **caractérisé en ce que** le pivotement automatique en retour est provoqué par des moyens de rappel agencés sur le premier élément conducteur (30) et/ou sur le deuxième élément conducteur (31).

41. Procédé selon l'une quelconque des revendications 27 à 40, **caractérisé en ce que** l'entraînement oscillant du chariot longitudinal (15) est effectué par l'intermédiaire d'une tige de couplage qui est couplée à un entraînement par courroie ou par chaîne sans fin qui entraîne une chaîne de transport sur laquelle sont agencés les éléments de réception de l'appareil de transport (10).

42. Procédé selon l'une quelconque des revendications 27 à 41, **caractérisé par** la précontrainte par ressort d'une unité de ressort de chariot longitudinal (44) agissant entre le chariot longitudinal (15) et l'élément de support (16), qui fait partie de l'unité de positionnement (14), lorsqu'une position de retour prédéterminée du chariot longitudinal (15) est atteinte pendant un cycle de retour.

43. Procédé selon la revendication 42, **caractérisé en ce que** la précontrainte par ressort de l'unité de ressort de chariot longitudinal (44) est provoquée au moyen d'au moins un élément de ressort longitudinal (45) qui est agencé d'un côté sur l'élément de support (16) et dont un côté d'élément de ressort longitudinal libre (46) vient en contact d'appui mécanique avec un élément de contre-appui longitudinal (47) agencé sur le chariot longitudinal (15) lorsque la position de retour prédéterminée est atteinte.

44. Procédé selon la revendication 42, **caractérisé en ce que** la précontrainte par ressort de l'unité de ressort de chariot longitudinal (44) est provoquée au moyen de l'au moins un élément de ressort longitudinal (45) qui est agencé d'un côté sur le chariot longitudinal (15) et dont un côté d'élément de ressort longitudinal libre (46) vient en contact d'appui mécanique avec un élément de contre-appui longitudinal (47) agencé sur l'élément de support (16) lorsque la position de retour prédéterminée est atteinte.

45. Procédé selon l'une quelconque des revendications 27 à 44, **caractérisé par** la précontrainte par ressort d'une unité de ressort de chariot transversal (48) agissant entre le chariot transversal (18) et le chariot longitudinal lorsqu'une position de déviation prédéterminée du chariot transversal (18) est atteinte.

46. Procédé selon la revendication 45, **caractérisé en ce que** la précontrainte par ressort de l'unité de ressort de chariot transversal (48) est provoquée au moyen d'au moins un élément de ressort transversal (49) qui est agencé d'un côté sur le chariot longitudinal (15) et dont un côté d'élément de ressort transversal libre (50) vient en contact d'appui mécanique avec un élément de contre-appui transversal agencé sur le chariot transversal (18) lorsque la position de déviation prédéterminée est atteinte.

47. Procédé selon la revendication 45, **caractérisé en ce que** la précontrainte par ressort de l'unité de ressort de chariot transversal (48) est provoquée au moyen de l'au moins un élément de ressort transversal (49) qui est agencé d'un côté sur le chariot transversal (18) et dont un côté d'élément de ressort transversal libre (50) vient en contact d'appui mécanique avec un élément de contre-appui transversal agencé sur le chariot longitudinal (15) lorsque la position de déviation prédéterminée est atteinte.

48. Procédé selon l'une quelconque des revendications 27 à 47, **caractérisé en ce que** la position de l'élément de support (16) est réglable transversalement à la direction de transport (11).

49. Procédé pour enlever la fourchette de carcasses de volailles, **caractérisé par** la réalisation des étapes du procédé selon l'une quelconque des revendications 27 à 48, les articles étant des carcasses de volailles, l'une des carcasses de volailles étant respectivement maintenue avec son côté cou orienté vers le poste de traitement (12) au moyen des éléments de réception (19), et la fourchette de la carcasse de volaille étant enlevée au moyen de l'au moins un outil de traitement (13) qui est configuré sous la forme d'une unité d'enlèvement de fourchette.
